# EUROPEAN PATENT APPLICATION

(11) **EP 1 437 218 A2**
(43) Date of publication of application: **14.07.2004**
(21) Application number: 04250069.4
(22) Date of filing: 08.01.2004
(51) Int. Cl.: B32B 31/10

(54) **Master processing apparatus**

(30) Priority: 10.01.2003 US 438995 P
(71) Applicant: Xyron, Inc., Scottsdale, Arizona 85260 (US)
(72) Inventor: Hoffman, Ron J., Phoenix, Arizona 85048 (US); Robb, Barry S., Scottsdale, Arizona 85259 (US); Causse, Brian M., Phoenix, Arizona 85050 (US)
(74) Representative: Freeman, Avi

(57) **Abstract**

A method of converting a master processing apparatus (10) for performing a master processing operation wherein adhesive bonding is affected between a pair of stock materials (20,22) and a master received therebetween from a first configuration configured for use with a pair of individual removable feed rolls to a second configuration configured for use with a cartridge including a cartridge body and a pair of feed rolls rotatably mounted on the cartridge body. The apparatus in at least its first configuration includes a frame (24) and a master processing assembly (26). The method includes mounting a cartridge support assembly (28) to the frame, the cartridge (12) in an operative position wherein the stock materials (20,22) on the feed rolls (16,18) of the cartridge (12) can be fed into the master processing assembly (26) for performance of the master processing operation.

## Description

The present invention relates to a master processing apparatus, a cartridge, a combination of a master processing apparatus and a cartridge, a retrofitting kit, a method of converting a master processing apparatus and a method of mounting a cartridge to a master processing apparatus.

In preferred embodiments, the present invention relates to a master processing apparatus for performing a master processing operation on a selected substrate.

Master processing apparatuses, such as laminating apparatuses and adhesive transfer apparatuses, are well known in the art. These apparatuses typically include a frame to which a pair of feed rolls are removably mounted (either individually or in a cartridge). A master processing assembly is provided in the frame, and the stock materials on the feed roll are unwound and fed into the processing assembly. A power or hand operated actuator actuates the processing assembly. A master (such as a photograph, printout, business card, or any other selected substrate or document) to be processed is fed into the processing assembly and the processing assembly causes adhesive from one or both the stock materials to bond to the master. In laminating operations, both stock materials are laminating films coated with pressure sensitive or heat sensitive adhesive, and these films are both adhered to the opposing sides of the master. In adhesive transfer operations, one of the stock materials is a release liner on which a layer of adhesive is coated, and the other is an aggressive or non-aggressive mask. During the operation, the adhesive on the release liner is transferred to one side of the master and, if the mask substrate is aggressive (i.e., has an affinity for adhesive bonding), then any excess adhesive will transfer to the mask substrate, which is then peeled off to expose the master on the release liner and remove the excess adhesive. For further details on these operations, reference may be made to U.S. Patent Nos. 5,580,417 and 5,584,962.

According to a first aspect of the present invention, there is provided a method of converting a master processing apparatus from a first configuration configured for use with a pair of individual removable feed rolls, to a second configuration configured for use with a cartridge. This aspect of the invention provides a method of converting a master processing apparatus for performing a master processing operation wherein adhesive bonding is affected between a pair of stock materials and a master received therebetween from (a) a first configuration configured for use with a pair of individual removable feed rolls having the stock materials wound thereon with at least one of the stock materials having adhesive provided thereon to (b) a second configuration configured for use with a cartridge including a cartridge body and a pair of feed rolls rotatably mounted on the cartridge body and having the stock materials wound thereon with at least one of the stock materials having adhesive provided thereon. The apparatus in at least its first configuration includes (a) a frame including structure for individually rotatably mounting the pair of individual feed rolls to enable the stock materials to be unwound therefrom, and (b) a master processing assembly constructed and arranged such that a master can be inserted into the master processing assembly together with the stock materials unwound from their respective individual feed rolls and disposed on opposing sides of the master. The master processing assembly is constructed and arranged to perform a master processing operation wherein the master processing assembly causes adhesive bonding between the master and the stock materials being fed into a feed side thereof. The method includes mounting a cartridge support assembly to the frame. The cartridge support assembly is constructed to support the cartridge in an operative position wherein the stock materials on the feed rolls of the cartridge can be fed into the master processing assembly for performance of the master processing operation.

According to a second aspect of the present invention there is provided an improved method for mounting a cartridge to master processing apparatus. This aspect of the invention provides a method of mounting a cartridge to a master processing apparatus. The cartridge includes a cartridge body and a pair of feed rolls rotatably mounted thereon each carrying a supply of stock material to be unwound, at least one of the stock materials having adhesive provided thereon. The cartridge body includes two portions removably coupled together, one of the feed rolls being mounted to one of the two portions and the other of the feed rolls being mounted to the other of the two portions. The apparatus includes (a) a frame, (b) a master processing assembly constructed and arranged such that a master can be inserted into the master processing assembly together with the stock materials unwound from their respective feed rolls and disposed on opposing sides of the master, the master processing assembly being constructed and arranged to perform a master processing operation wherein the master processing assembly causes adhesive bonding between the master and the stock materials being fed into a feed side thereof, and (c) a cartridge support assembly constructed to support the cartridge in an operative position wherein the stock materials on the feed rolls of the cartridge can be fed into the master processing assembly for performance of the master processing operation.

The cartridge support assembly is moveable from a cartridge receiving position to a cartridge operating position. The cartridge support assembly is constructed such that, as the cartridge support is moved to from the cartridge receiving position to the cartridge operating position thereof, the cartridge support assembly separates the two portions of the cartridge body from one another and individually positions each of the two portions of the cartridge body in individual operative positions wherein the stock materials on each of the feed rolls can be fed into the master processing assembly for performance of the master processing operation, thereby establishing the operative position of the cartridge. The method includes mounting the cartridge with the two portions removably coupled together to the cartridge support assembly in its cartridge receiving position. The method further includes moving the cartridge support assembly to its cartridge operating position to cause the cartridge support to separate the two portions of the cartridge body from one another and individually position each of the two portions of the cartridge body in individual operative positions wherein the stock materials on each of the feed rolls can be fed into the master processing assembly for performance of the master processing operation, thereby establishing the operative position of the cartridge. This aspect is not limited to a retrofit master processing apparatus and may be applied to any type of master processing apparatus.

According to a third aspect of the present invention there is provided an improved master processing apparatus for use with a cartridge. This aspect of the invention provides a master processing apparatus for use with a cartridge, the cartridge including a cartridge body and a pair of feed rolls rotatably mounted thereon each carrying a supply of stock material to be unwound. The cartridge body includes two portions removably coupled together, one of the feed rolls being mounted to one of the two portions and the other of the feed rolls being mounted to the other of the two portions. The apparatus includes a frame and a master processing assembly constructed and arranged such that a master can be inserted into the master processing assembly together with the stock materials unwound from their respective feed rolls and disposed on opposing sides of the master. The master processing assembly performs a master processing operation wherein the master processing assembly causes adhesive bonding between the master and the stock materials being fed into a feed side thereof. A cartridge support assembly is constructed to support the cartridge in an operative position wherein the stock materials on the feed rolls of the cartridge can be fed into the master processing assembly for performance of the master processing operation.

The cartridge support assembly is moveable from a cartridge receiving position to a cartridge operating position. The cartridge support assembly is constructed such that, as the cartridge support assembly is moved from the cartridge receiving position to the cartridge operating position thereof, the cartridge support assembly separates the two portions of the cartridge body from one another and individually positions each of the two portions of the cartridge body in individual operative positions wherein the stock materials on each of the feed rolls can be fed into the master processing assembly for performance of the master processing operation, thereby establishing the operative position of the cartridge. This aspect is not limited to a retrofit master processing apparatus and may be applied to any type of master processing apparatus.

According to a fourth aspect of the present invention there is provided a retrofitting kit for converting a master processing apparatus for performing a master processing operation wherein adhesive bonding is affected between a pair of stock materials and a master received therebetween from (a) a first configuration configured for use with a pair of individual removable feed rolls having the stock materials wound thereon with at least one of the stock materials having adhesive provided thereon to (b) a second configuration configured for use with a cartridge including a cartridge body and a pair of feed rolls rotatably mounted on the cartridge body and having the stock materials wound thereon with at least one of the stock materials having adhesive provided thereon, the apparatus in at least its first configuration comprising (a) a frame including structure for individually rotatably mounting the pair of individual feed rolls to enable the stock materials to be unwound therefrom, and (b) a master processing assembly constructed and arranged such that a master can be inserted into the master processing assembly together with the stock materials unwound from their respective individual feed rolls and disposed on opposing sides of the master, the master processing assembly being constructed and arranged to perform a master processing operation wherein the master processing assembly causes adhesive bonding between the master and the stock materials being fed into a feed side thereof, the retrofitting kit comprising: a cartridge support assembly constructed to be mounted to the frame of the master processing apparatus and to support the cartridge in an operative position wherein the stock materials on the feed rolls of the cartridge can be fed into the master processing assembly for performance of the master processing operation.

According to a fifth aspect of the present invention there is provided a combination comprising: a cartridge including a cartridge body and a pair of feed rolls rotatably mounted thereon each carrying a supply of stock material to be unwound, at least one of the stock materials having adhesive provided thereon, the cartridge body including two portions removably coupled together, one of the feed rolls being mounted to one of the two portions and the other of the feed rolls being mounted to the other of the two portions; and a master processing apparatus comprising (a) a frame, and (b) a master processing assembly constructed and arranged such that a master can be inserted into the master processing assembly together with the stock materials unwound from their respective feed rolls and disposed on opposing sides of the master, the master processing assembly being constructed and arranged to perform a master processing operation wherein the master processing assembly causes adhesive bonding between the master and the stock materials being fed into a feed side thereof, and (c) a cartridge support assembly constructed to support the cartridge in an operative position wherein the stock materials on the feed rolls of the cartridge can be fed into the master processing assembly for performance of the master processing operation, the cartridge support assembly being moveable from a cartridge receiving position to a cartridge operating position, the cartridge support assembly being constructed such that, as the cartridge support assembly is moved from the cartridge receiving position to the cartridge operating position thereof, the cartridge support assembly separates the two portions of the cartridge body from one another and individually positions each of the two portions of the cartridge body in individual operative positions wherein the stock materials on each of the feed rolls can be fed into the master processing assembly for performance of the master processing operation, thereby establishing the operative position of the cartridge.

According to a sixth aspect of the present invention there is provided a cartridge comprising: a cartridge body; a pair of feed rolls rotatably mounted on the cartridge body and each carrying a supply of stock material having adhesive provided thereon; the cartridge body including two portions removably coupled together, one of the feed rolls being mounted to one of the two portions and the other of the feed rolls being mounted to the other of the two portions.

Other aspects, features and advantages of this invention will become apparent from the following detailed description when taken in conjunction with the accompanying drawings, which are a part of this disclosure and which illustrate, by way of example, principles of this invention.

Examples of embodiments of the present invention will now be described in detail with reference to the accompanying drawings, in which:
Fig. 1 is a front end view of an example of one embodiment of a master processing apparatus constructed in accordance with the present invention;
Fig. 2 is an exploded perspective view of the master processing apparatus shown in Fig. 1;
Fig. 2b is a close-up perspective view of part of the master processing assembly of the master processing apparatus shown in Fig. 1;
Fig. 2c is a perspective view of the master processing apparatus shown in Fig. 1 with an outer decorative shell removed;
Fig. 3 is a perspective view illustrating the cartridge support assembly of the master processing assembly shown in Fig. 1;
Fig. 4 is a perspective view of a cartridge holder of the cartridge support assembly shown in Fig. 3, the holder being shown in isolation;
Fig. 5 is a close-up perspective view of the cartridge support assembly shown in Fig. 3;
Fig. 6 is a perspective view of the cartridge support assembly with the cartridge holders thereof moved to their laterally outermost positions;
Fig. 7 is a perspective view showing one of the cartridge holders of the cartridge support assembly being pivoted away from one of the support bars;
Fig. 8 is a perspective view similar to Fig. 7, but taken from another angle;
Fig. 9 is a perspective view showing one of the cartridge holders of the cartridge support assembly being slid laterally inwardly along the other of the support bars;
Fig. 10 is a perspective view of the cartridge support assembly with one of the cartridge holders of cartridge support assembly in an inwardly spaced position;
Fig. 11 is a perspective view similar to Fig. 10, but taken from another angle;
Fig. 11b is a perspective view of a fan that is secured beneath the cartridge support assembly;
Fig. 12 is a rear perspective view of the master processing apparatus of Fig. 1 with the cover in an open position;
Fig. 12b is a front end perspective view of the master processing apparatus of Fig. 1 with the cover in an open position;
Fig. 13 is a perspective view of a cam element and switch unit associated with the cover of the master processing apparatus;
Fig. 14 is a perspective view of a cartridge structured for use with the master processing apparatus shown in Fig. 1;
Fig. 15 is a transverse cross-sectional view of the cartridge shown in Fig. 14;
Fig. 16 is a perspective view showing two portions of the cartridge of Fig. 14;
Fig. 17 is an exploded view of one end of the cartridge of Fig. 14;
Fig. 18 is a cross-sectional view of one end of the cartridge of Fig. 14, the latch of the cartridge in the locking position;
Fig. 19 is a perspective view illustrating a cartridge being mounted in the cartridge support assembly with the cartridge support assembly in a cartridge receiving position, the housing of the apparatus being removed for clarity of internal components;
Fig. 20 is a cross-sectional view of one end of the cartridge of Fig. 14 as received in the cartridge support assembly in Fig. 19, the latch of the cartridge moved to the releasing position by the cartridge support assembly;
Fig. 21 is a view similar to Fig. 19 illustrating the cartridge support assembly being moved to a cartridge operating position;
Fig. 22 is a view similar to Fig. 19 illustrating the cartridge support assembly in the cartridge operating position and showing the two portions of the cartridge in their individual operative positions;
Fig. 23 is a top perspective view illustrating one of the portions of the cartridge in its individual operative position;
Fig. 24 is a cross-sectional view illustrating the cartridge support assembly in the cartridge operating position and showing the two portions of the cartridge in their individual operative positions with the end portions of the stock materials spaced from the master processing assembly;
Fig. 25 is a cross-sectional view illustrating the cartridge support assembly in the cartridge operating position and showing the two portions of the cartridge in their individual operative positions with the end portions of the stock materials engaged with the master processing assembly;
Fig. 26 is a perspective view illustrating another embodiment of the cartridge support assembly in a cartridge receiving position, the housing of the apparatus being removed for clarity of internal components;
Fig. 27 is a view similar to Fig. 26 illustrating a cartridge mounted in the cartridge support assembly of Fig. 26 with the cartridge support assembly in a cartridge receiving position;
Fig. 28 is a close-up perspective view illustrating a cartridge mounted to the cartridge support assembly of Fig. 26;
Fig. 29 is a view similar to Fig. 26 illustrating the cartridge support assembly of Fig. 26 being moved to a cartridge operating position;
Fig. 30 is a view similar to Fig. 26 illustrating the cartridge support assembly of Fig. 26 in the cartridge operating position with the two portions of the cartridge in individual operative positions;
Fig. 31 illustrates another embodiment of the cartridge support assembly in which a spring is provided to bias the cam elements of the cartridge support assembly;
Fig. 32 illustrates another embodiment of the cartridge support assembly in which the cam elements include elongate slots that receive pins provided on the frame of the master processing apparatus;
Fig. 33 is an enlarged perspective view illustrating the cam element of Fig. 13 engaged with both switches of the switch unit;
Fig. 34 is an enlarged perspective view illustrating the cam element of Fig. 13 spaced from both switches of the switch unit;
Fig. 35 is an enlarged perspective view illustrating the cam element of Fig. 13 spaced from one of the switches of the switch unit and engaged with the other of the switches of the switch unit;
Fig. 36 illustrates an embodiment of the cover of the master processing apparatus in which the cover includes a rubber stop member;
Fig. 37 illustrates an embodiment of the cartridge seat and cartridge in which the cartridge seat includes protrusions that engage within recesses provided in the cartridge;
Fig. 38 illustrates a switch unit of the master processing apparatus that provides feedback regarding the position of the cartridge support assembly;
Fig. 39 is a perspective view of another embodiment of a cartridge;
Fig. 40 is a side view of the cartridge shown in Fig. 39 engaged with an embodiment of a cartridge seat of a cartridge support assembly;
Fig. 41 is a side view of the cartridge shown in Fig. 39;
Fig. 42 is a side view illustrating one end of the cartridge of Fig. 39 engaged with a cartridge holder of a cartridge support assembly;
Fig. 43 is a side view of another embodiment of a cartridge;
Fig. 44 is a side view of another embodiment of a cartridge;
Fig. 45 is a side view of another embodiment of a cartridge;
Fig. 46 is an enlarged view of a handle portion of the cartridge shown in Fig. 45;
Fig. 47 is a perspective view illustrating an embodiment of a cartridge seat of a cartridge support assembly for receiving a cartridge as shown in Figs. 39 and 43-45;
Fig. 48 is a side view illustrating a cartridge as shown in Figs. 39 and 43-45 being mounted to the cartridge seat shown in Fig. 47;
Fig. 49 is a rear view illustrating a cartridge as shown in Figs. 39 and 43-45 mounted to the cartridge seat of Fig. 47;
Fig. 50 is a perspective view illustrating a cartridge as shown in Figs. 39 and 43-45 mounted to the cartridge seat shown in Fig. 47;
Fig. 51 is an exploded view of an embodiment of a feed roll support of a cartridge;
Fig. 52 is a side view of the feed roll support shown in Fig. 51;
Fig. 53 is a cross-section through line 53-53 of Fig. 52;
Fig. 54 is a cross-sectional view illustrating the feed roll support shown in Fig. 51 being engaged with a feed roll;
Fig. 55 is a cross-sectional view illustrating the feed roll support shown in Fig. 51 engaged with a feed roll and a tension washer of the feed roll support in a non-biased position;
Fig. 56 is a cross-sectional view illustrating the feed roll support shown in Fig. 51 engaged with a feed roll and a tension washer of the feed roll support in a biased position;
Fig. 57 is a perspective view of another embodiment of a master processing apparatus;
Fig. 58 is a perspective view illustrating the cartridge support assembly of the master processing assembly shown in Fig. 57;
Fig. 59 is an exploded view of the cartridge support assembly shown in Fig. 58;
Fig. 60 is a perspective view of another embodiment of a cartridge;
Fig. 61 is an exploded view of the cartridge shown in Fig. 60;
Fig. 62 is an end view of the cartridge shown in Fig. 60;
Fig. 63 is a perspective view illustrating the cartridge shown in Fig. 60 mounted in the cartridge support assembly of Fig. 58 with the cartridge support assembly in a cartridge receiving position;
Fig. 64 is a view similar to Fig. 63 illustrating the cartridge support assembly of Fig. 58 being moved to a cartridge operating position;
Fig. 65 is a view similar to Fig. 63 illustrating the cartridge support assembly of Fig. 58 being moved further to a cartridge operating position; and
Fig. 66 is a view similar to Fig. 63 illustrating the cartridge support assembly of Fig. 58 in the cartridge operating position with the two portions of the cartridge shown in Fig. 58 in individual operative positions.

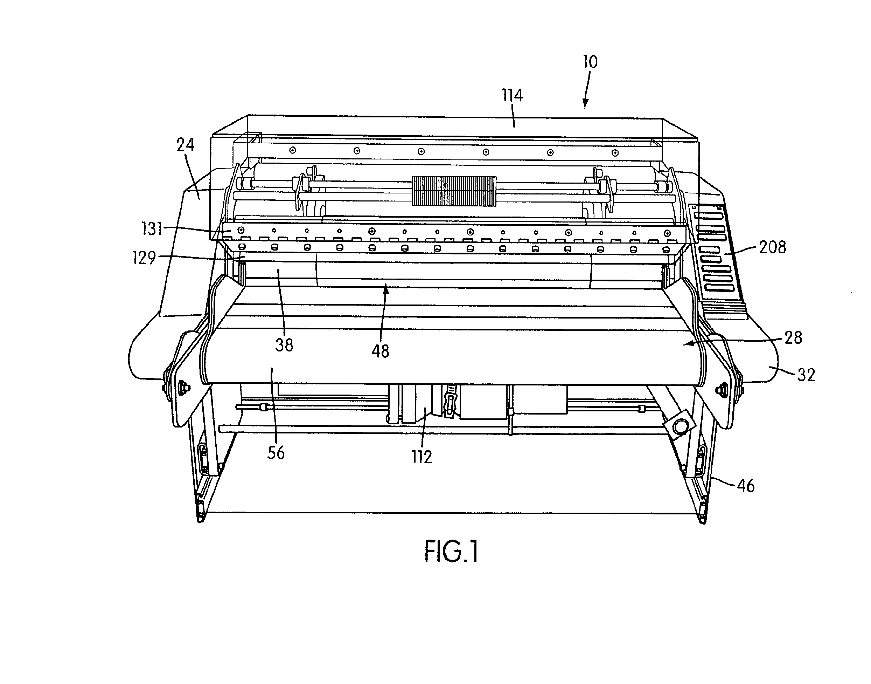

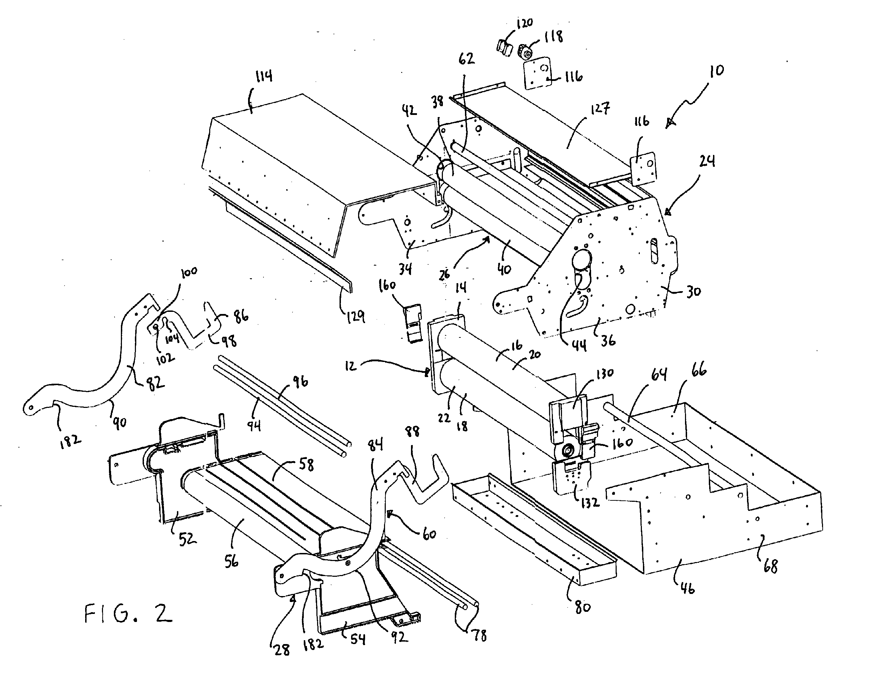

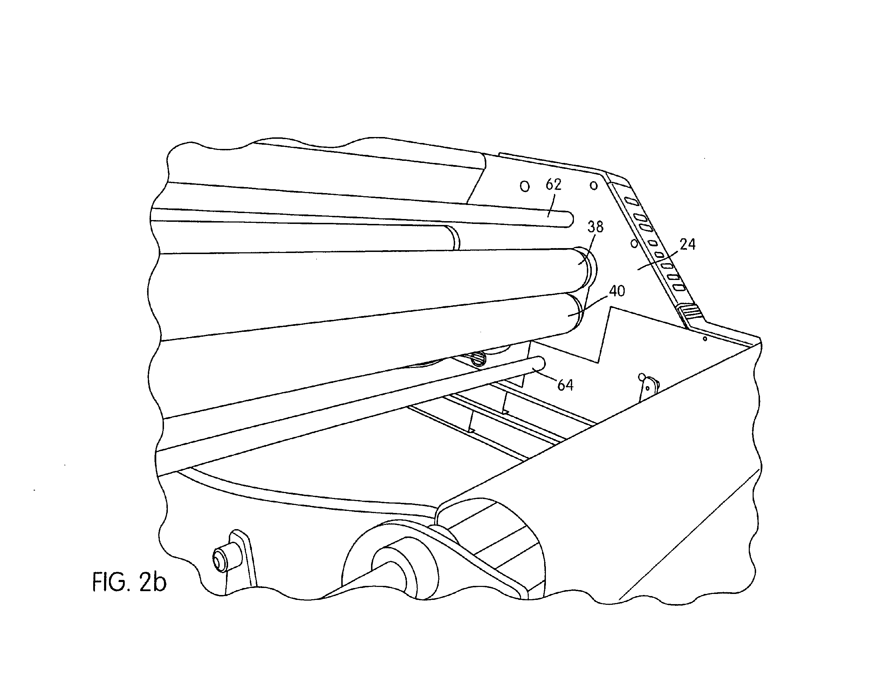

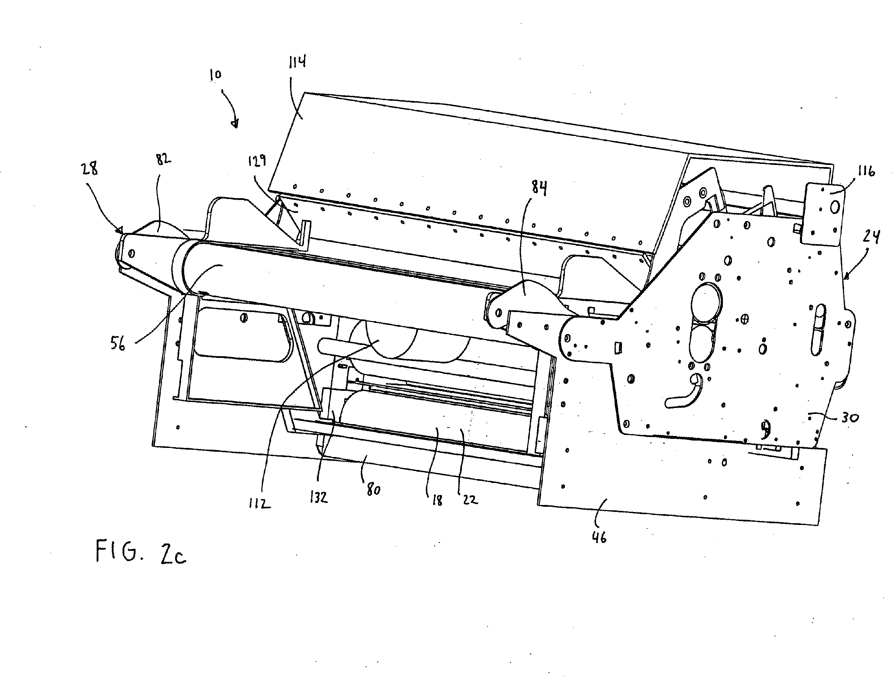

Fig. 1 shows one embodiment of a master processing apparatus 10 for performing a master processing operation where adhesive bonding is affected between a pair of stock materials and a master received therebetween. As explained below, the master processing apparatus 10 has been converted from a first configuration to a second configuration. In the first configuration, the master processing apparatus is configured for use with a pair of individual removable feed rolls having the stock materials wound thereon with at least one of the stock materials having adhesive provided thereon. In the second configuration as shown, the master processing apparatus 10 is configured for use with a cartridge 12 (see Figs. 2, 14, and 15) including a cartridge body 14 and a pair of feed rolls 16, 18 rotatably mounted on the cartridge body 14, and having the stock materials 20, 22 wound thereon, with at least one of the stock materials 20, 22 having adhesive provided thereon. Converting the master processing apparatus to a cartridge based system facilitates the removal and replacement of feed rolls to the master processing apparatus.

In the illustrated embodiment, the apparatus 10 in its first, pre-existing configuration, is a GBC Ultima 65, available from General Binding Corporation of Northbrook, Illinois. This pre-existing apparatus has been widely distributed, and only accepts individual wound rolls of laminating film. By converting this apparatus 10 from its normal or pre-existing first configuration, to a second configuration capable of receiving a cartridge, ease of supply matching and loading is provided, without the need for purchasing an entirely new system.

The stock materials 20, 22 can be, for example, a pair of transparent laminating films that are applied to opposing sides of the document, photograph or other master to be protected. The stock materials 20, 22 may be designed for adhesive transfer with one of the stock materials being a release liner coated with a pressure-sensitive adhesive, and the other stock material being an adhesive mask substrate. (See, U.S. Patent Nos. 5,580,417, 5,584,962, and 6,422,281). Other variations of master processing operations may be performed with the apparatus 10. For example, stock materials may include a magnetized substrate and an aggressive or non-aggressive adhesive mask. (See, U.S. Application of Neuburger, Serial No. 10/372,807 filed February 26, 2003). All the patents and patent applications mentioned hereinabove are hereby incorporated into the present application by reference. Regardless of the specific type of application, the apparatus 10 is operable to unwind the supply of stock material 20, 22 on each roll 16, 18 and apply the stock material 20, 22 to respective sides of the master. At least one of the stock materials 20, 22 has a layer of adhesive thereon, which adheres the stock materials 20, 22 to one another and the master therebetween.

Fig. 2 shows an exploded view of the master processing apparatus 10 in its second, cartridge receiving configuration. In general, the apparatus 10 includes a frame 24, a master processing assembly 26, and a cartridge support assembly 28. The frame 24 and the master processing assembly 26 are maintained from the first, pre-existing configuration of the apparatus 10. That is, they are original, pre-existing parts of the apparatus 10. The cartridge support assembly 28 is not an original part of the apparatus 10 and is provided to retrofit the apparatus 10 into its second, cartridge receiving configuration. The cartridge support assembly 28 is mounted to the frame 24 to convert or retrofit the apparatus to its second, cartridge receiving configuration. The cartridge support assembly 28 is constructed to support the cartridge 12 in an operative position wherein the stock materials 20, 22 on the feed rolls 16, 18 of the cartridge 12 can be fed into the master processing assembly 26 for performance of a master processing operation, as will be further discussed.

The frame 24 includes an internal sub-frame 30 (Figs. 2 and 2c) and an outer decorative shell 32 (Fig. 1). The sub-frame 30 is constructed and arranged to mount the associated components of the master processing assembly 26. Specifically, the sub-frame 30 includes a pair of opposing side walls 34, 36. The master processing assembly 26 includes a pair of cooperating pressure-applying structures in the form of first and second nip rollers 38, 40, respectively. The nip rollers 38, 40 are rotatably mounted between the side walls 34, 36. More specifically, the side walls 34, 36 include openings 42, 44 that are configured to rotatably support the nip rollers 38, 40 therebetween. In the illustrated embodiment, the nip rollers 38, 40 are heated nip rollers that are capable of simultaneously heating the stock materials 20, 22 and compressing them with the master to facilitate forming a strong bond between the stock materials 20, 22 and the master during a master processing operation, as will be further discussed. However, the nip rollers 38, 40 may be non-heated nip rollers capable of applying pressure to the stock materials 20, 22 and the master during the master processing operation. Fig. 2b illustrates the nip rollers 38, 40 and frame 24 in greater detail.

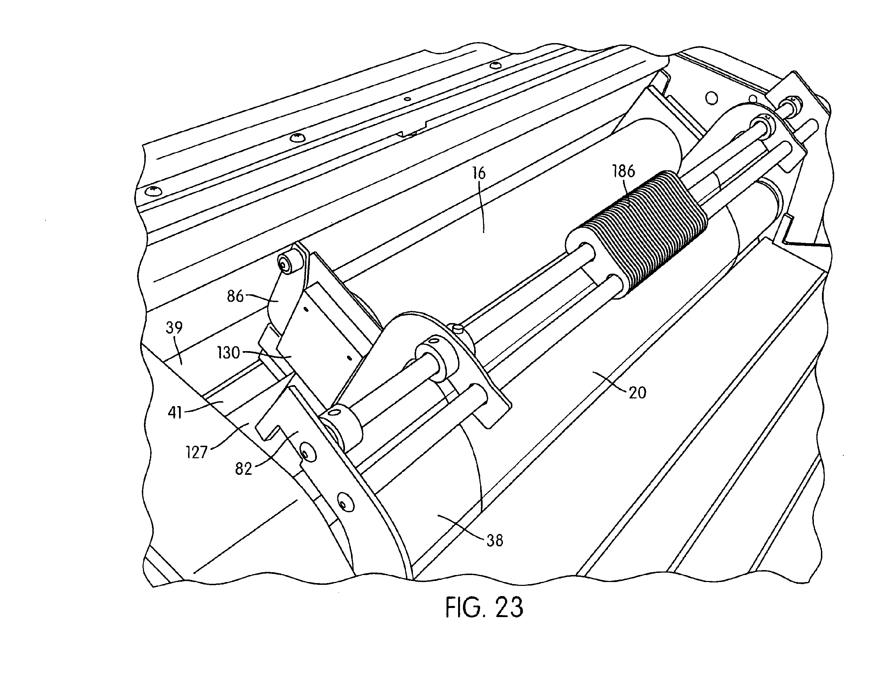

As best shown in Figs. 23-25, the master processing assembly 26 includes a second pair of nip rollers 39, 41, respectively. The nip rollers 39, 41 are rotatably mounted between the side walls 34, 36. More specifically, the side walls 34, 36 include openings 43, 45 that are configured to rotatably support the nip rollers 39, 41 therebetween, as shown in Fig. 2. The second set of nip rollers 39, 41 cooperate with the heated nip rollers 38, 40 to maintain tension in the stock materials 20, 22 as will be further discussed.

It should be understood that the master processing assembly may have any construction or configuration and the illustrated embodiment is not intended to be limiting.

The side walls 34, 36 also include a plurality of openings that were used in the first configuration of the apparatus for individually rotatably mounting a pair of individual feed rolls to enable the stock materials to be unwound therefrom. More specifically, in the first configuration of the apparatus, each side wall 34, 36 had a bracket secured thereto with fasteners that extended through openings in respective side walls. The brackets were configured to support individual feed rolls. However, in the second configuration of the apparatus, these brackets are not needed and simply removed.

As shown in Figs. 2 and 2c, a bottom frame structure 46 is mounted to the frame 24 to convert or retrofit the apparatus to its second, cartridge receiving configuration. The bottom frame structure 46 is not an original part of the apparatus 10. The sub-frame 30 is mounted to the bottom frame structure 46, by fasteners, for example. The bottom frame structure 46 is constructed to space the sub-frame 30 upwardly from a generally horizontal support surface, such as a table.

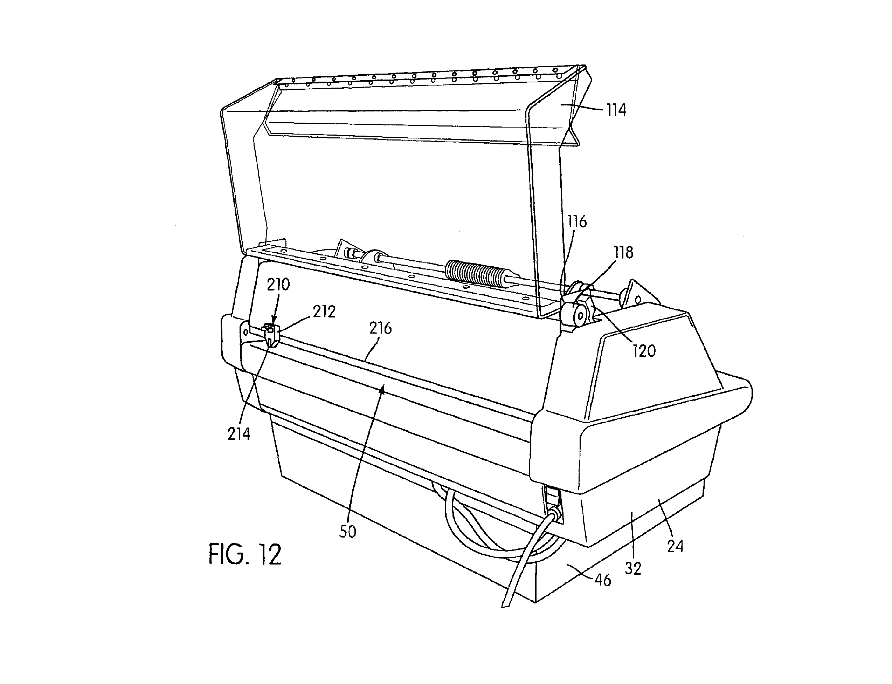

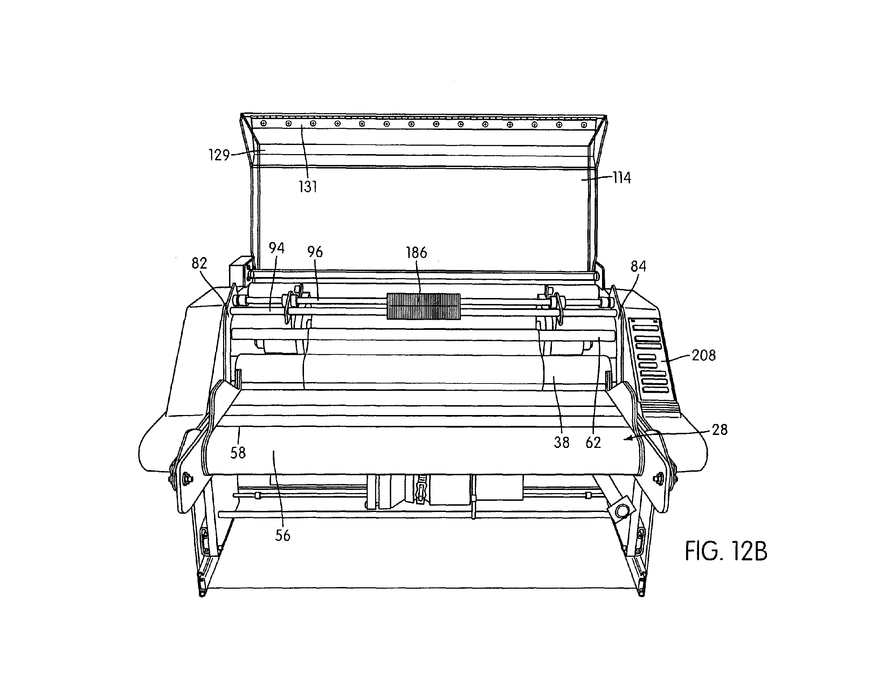

The frame 24 includes a feed opening 48 (Fig. 1) and an exit or discharge opening 50 (Fig. 12). When the apparatus 10 is converted to its retrofit, second configuration, and the cartridge is moved to its operative position, a master can be inserted into the feed opening 48, and then the master, along with unwound end portions of stock material 20, 22 from the feed rolls 16, 18 are passed through the master processing assembly 26 and out the discharge opening 50. At least one of the stock materials 20, 22 is covered with a layer of a heat activated adhesive. As the master and the unwound stock material 20, 22 pass between the heated nip rollers 38, 40, the heated nip rollers 38, 40 perform a master processing operation. The heated nip rollers 38, 40 emit heat to effectively activate the adhesive and apply pressure to the stock materials 20, 22 (and to the master when it is between the nip rollers 38, 40) during the master processing operation, which causes adhesive bonding of each adhesive layer provided by the stock materials 20, 22. This bonds the master and the stock materials 20, 22 to form a final product of the master and the stock materials 20, 22. The final product passes through the second set of nip rollers 39, 41 that rotate at a slightly faster rate than nip rollers 38, 40 to maintain tension of the stock materials to keep the final product taut, and then is discharged out the discharge opening 50 by the driving action of the nip rollers 39, 41.

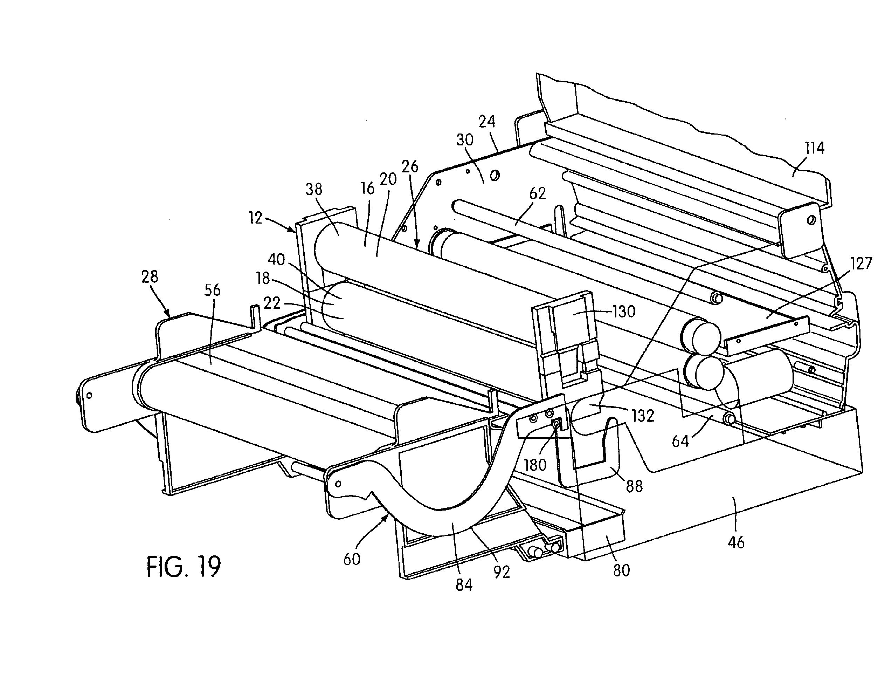

As shown in Figs. 19, and 21-25, a guard 127 is positioned between the nip rollers 38, 40 and the second set of nip rollers 39, 41 to facilitate movement of the master and stock materials 20, 22 in a substantially flat condition from the nip rollers 38, 40 to the second set of nip rollers 39, 41. The guard 127 is maintained from the first, pre-existing configuration of the apparatus 10. The guard 127 prevents the stock materials 20, 22 and the master from sagging and/or bunching up as they are fed from the nip rollers 38, 40 to the second set of nip rollers 39, 41.

As aforesaid, the nip rollers 38, 40 may be non-heated nip rollers. In this configuration, at least one of the stock materials 20, 22 is covered with a layer of a pressure-sensitive adhesive with the non-heated nip rollers applying pressure to the stock materials 20, 22 (and to the master when it is between the nip rollers) during the master processing operation, which bonds the master and the stock materials 20, 22.

In the illustrated embodiment, a motor (not shown) is operatively connected to the nip rollers 38, 40 to effect operation thereof. Alternatively, the nip rollers 38, 40 may be manually driven by a crank handle, for example.

Further, one guide bar 62 is mounted between the side walls 34, 36 and positioned in spaced relation from the nip roller 38 and another guide bar 64 is mounted between side walls 66, 68 of the bottom frame structure 46 and positioned in spaced relation from the nip roller 40. The guide bars 62, 64 facilitate the positioning of the stock materials 20, 22 around the nip rollers 38, 40 when the cartridge 12 is moved to its operative position, as will be further discussed.

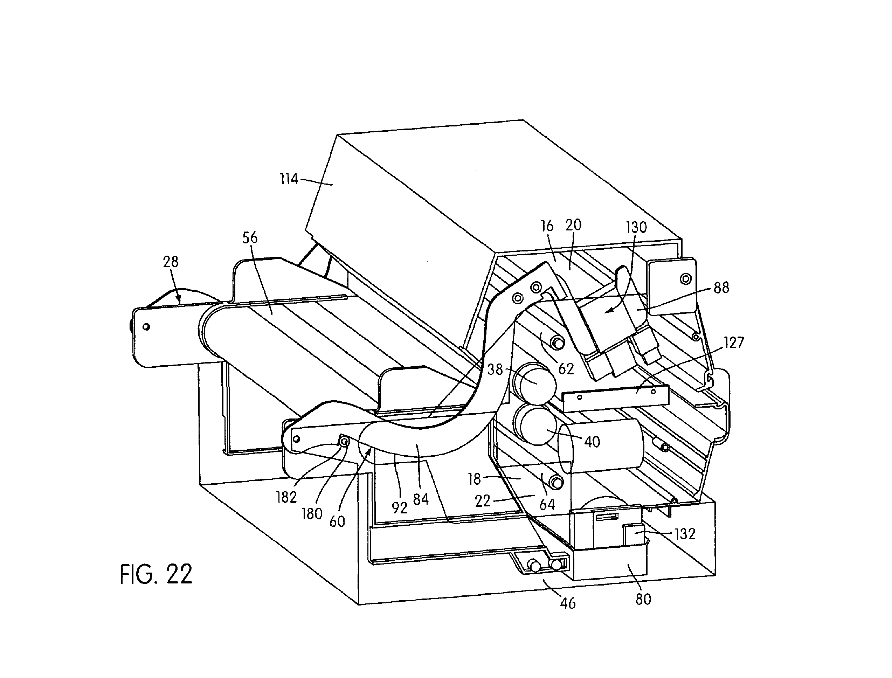

The cartridge support assembly 28 is slidably mounted to the frame 24 on a feed side of the master processing assembly 26 for movement between a cartridge receiving position (see Figs. 19, 26, and 27) and a cartridge operating position (see Figs. 22, 24, 25, and 30). The cartridge support assembly 28 includes a pair of side walls 52, 54 that support a feed tray 56 therebetween. The feed tray 56 includes a substrate supporting surface 58 that supports the master as it is being fed into the master processing assembly 26. The cartridge support assembly 28 also includes a cartridge support structure 60 that is pivotally mounted to the side walls 52, 54.

The feed tray 56 of the cartridge support assembly 28 is maintained from the first, pre-existing configuration of the apparatus 10. That is, the feed tray 56 is an original, pre-existing part of the apparatus 10. However, the side walls 52, 54 and cartridge support assembly 60 are not original parts of the apparatus 10 and have been attached to the feed tray 56 to retrofit the apparatus 10 into its second, cartridge receiving configuration. The feed tray 56 may be modified to accommodate the side walls 52, 54 and cartridge support assembly 60 attached thereto. Moreover, a new feed tray may be provided for attachment to the side walls 52, 54 and cartridge support assembly 60, thereby eliminating the use of the original, preexisting feed tray of the apparatus 10.

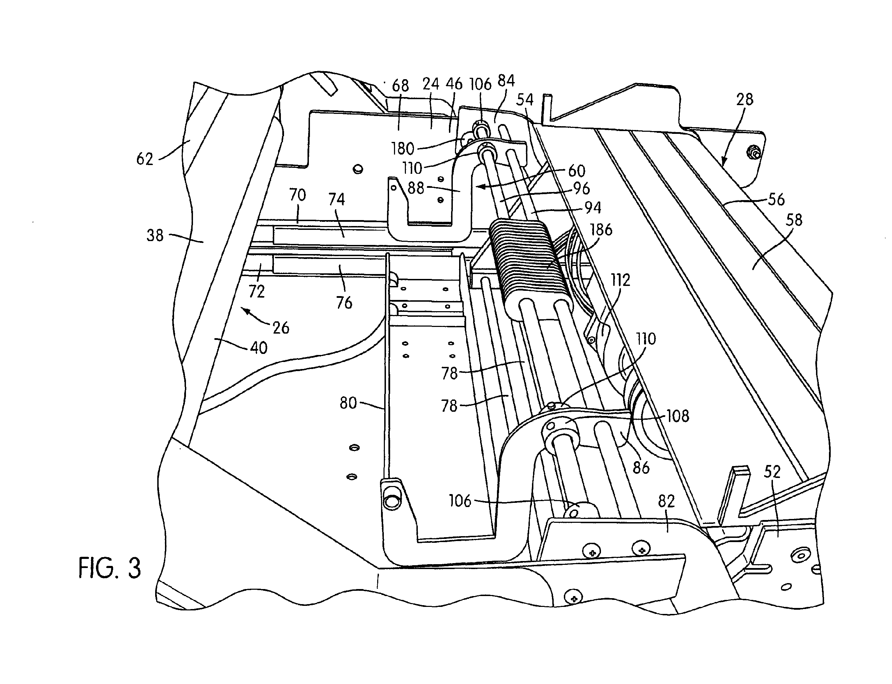

As shown in Fig. 3, each side wall 66, 68 of the bottom frame structure 46 (only one side wall being visible) includes a pair of first track portions 70, 72 mounted thereto. Each of the side walls 52, 54 of the cartridge support assembly 28 (only one side wall being visible) includes a pair of second track portions 74, 76 secured thereto. These track portions 70, 72, 74, 76 are not an original part of the apparatus 10 and are provided as part of the retrofitting kit along with the cartridge support assembly 28. The second track portions 74, 76 are slidably engaged with the first track portions 70, 72 to allow the cartridge support assembly 28 to slide relative to the bottom frame structure 46, and hence relative to the sub-frame 30, between the cartridge receiving and cartridge operating positions. However, each side wall 66, 68 of the bottom frame structure 46 may include any number of track portions that are slidably engageable with a respective track portion provided on the cartridge support assembly 28 to allow the cartridge support assembly 28 to slide relative to the bottom frame structure 46.

A pair of support bars 78 extend between the side walls 52, 54 of the cartridge support assembly 28 to provide stability to the cartridge support assembly 28. Further, the cartridge support assembly 28 includes a cartridge seat 80, in the form of an elongate open-ended box, positioned forward of the side walls 52, 54. The cartridge seat 80 is secured between the second track portions 76 to allow the cartridge seat 80 to slide along with the cartridge support assembly 28 between the cartridge receiving and cartridge operating positions. The support bars 78 and cartridge seat 80 are provided as part of the retrofitting kit along with the cartridge support assembly 28.

The cartridge support structure 60 includes a pair of cam elements 82, 84 and a pair of cartridge holders 86, 88 structured to support the cartridge 12. Each cam element 82, 84 has a generally elongate U-shape contour providing a cam surface 90, 92. One end of each cam element 82, 84 is pivotally mounted to a rear portion of a respective side wall 52, 54. The opposite ends of the pair of cam elements 82, 84 support a pair of support bars 94, 96 therebetween. The pair of cartridge holders 86, 88 are mounted on the pair of support bars 94, 96 in a manner which will be described below.

As shown in Figs. 19, 21, and 22, the cam surfaces 90, 92 of the cam elements 82, 84 engage bearings 180 provided on respective side walls 66, 68 of the bottom frame structure 46. The bearings 180 are provided as part of the retrofitting kit along with the bottom frame structure 46. The cam surfaces 90, 92 ride along the bearings 180 when the cartridge support assembly 28 is moved between the cartridge receiving and cartridge operating positions, as will be further discussed.

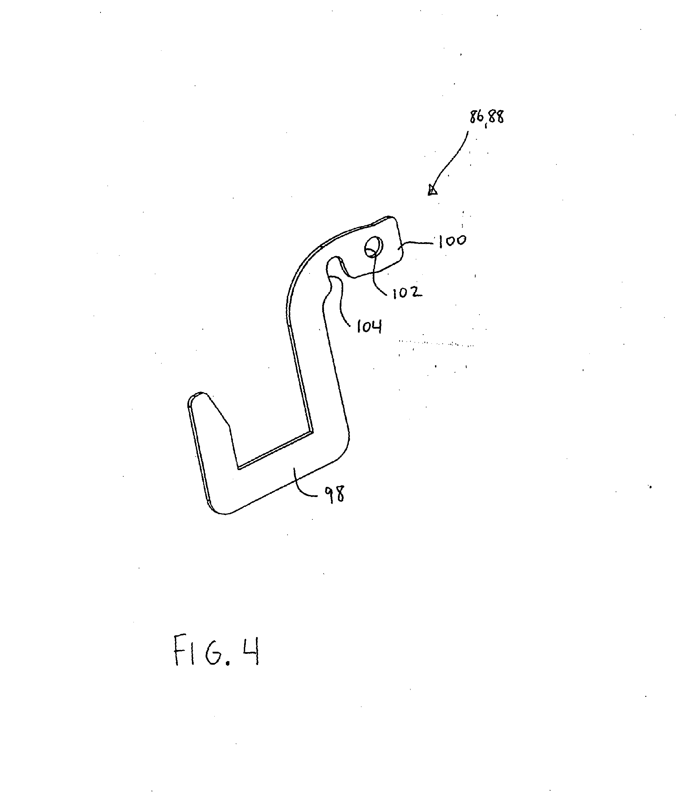

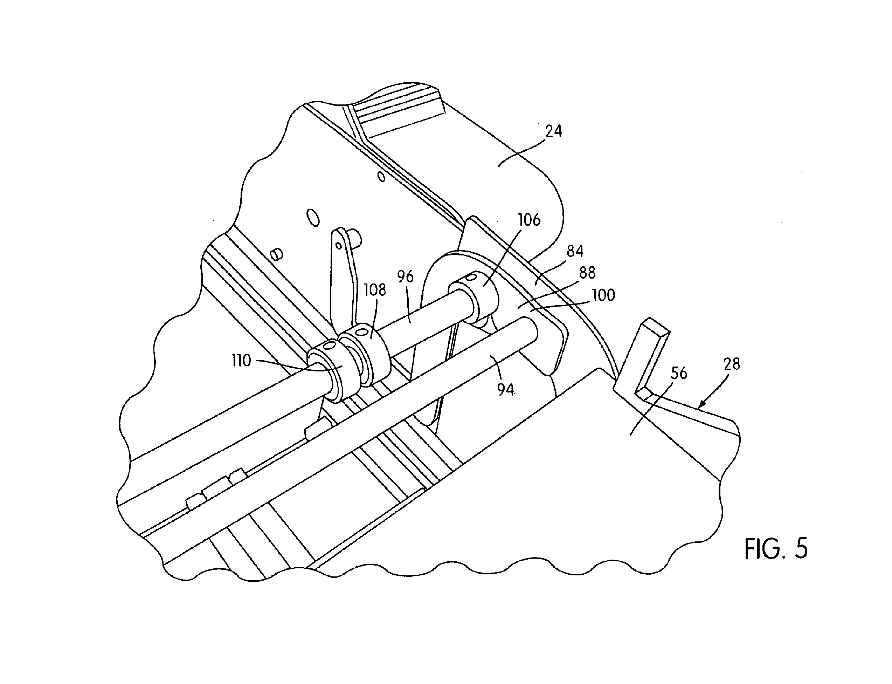

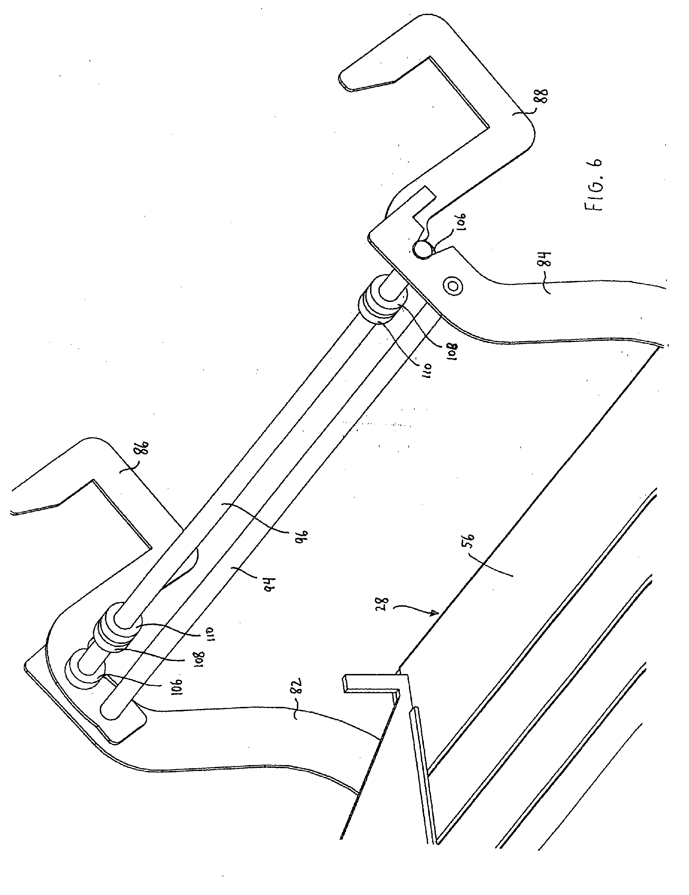

As shown in Fig. 4, each cartridge holder 86, 88 includes a U-shape portion 98 and a mounting portion 100. The mounting portion 100 includes a generally circular hole 102 bored therethrough and a partially circular recess 104 formed from the edge thereof. The cartridge holders 86, 88 are adjustably mounted to the bars 94, 96 such that the cartridge holders 86, 88 can be moved to accommodate different cartridges that support different feed roll widths. As shown in Figs. 5 and 6, each cartridge holder 86, 88 is mounted on the bars 94, 96 such that one of the bars 94 extends through the hole 102 and the other bar is 96 positioned to engage within the recess 104. In Figs. 5 and 6, the mounting portion 100 of each cartridge holder 86, 88 is positioned between a respective cam element 82, 84 and a cylindrical retainer 106. The retainer 106 is secured to the bar 96 by a fastener and prevents movement of the respective cartridge holder 86, 88 along the bars 94, 96.

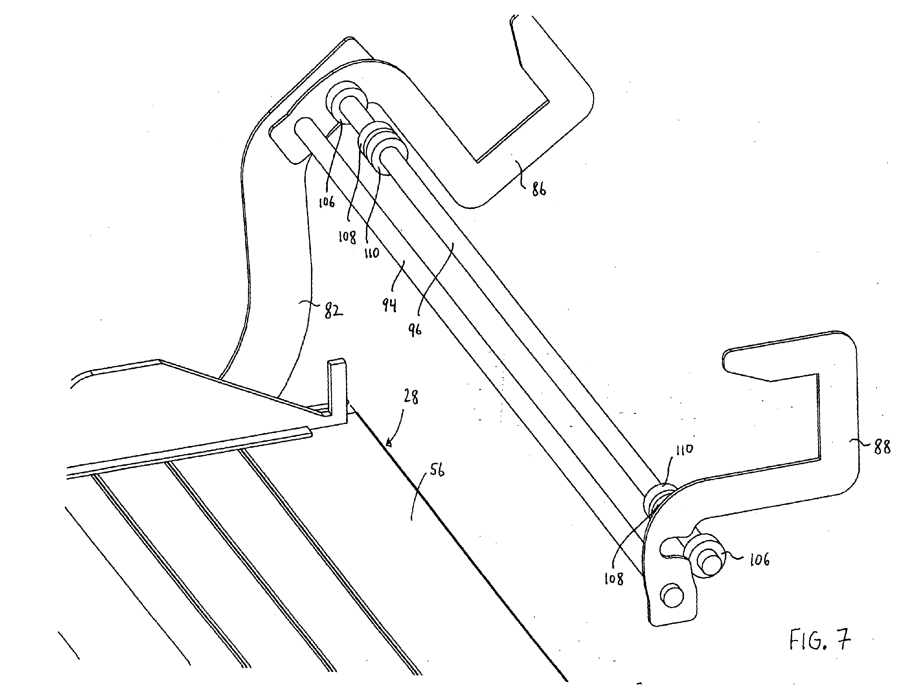

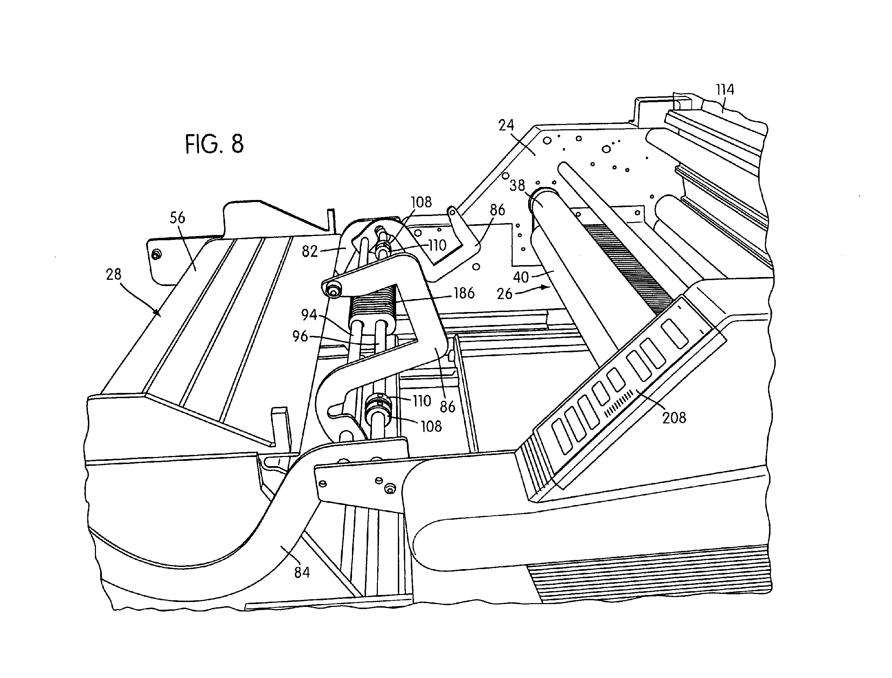

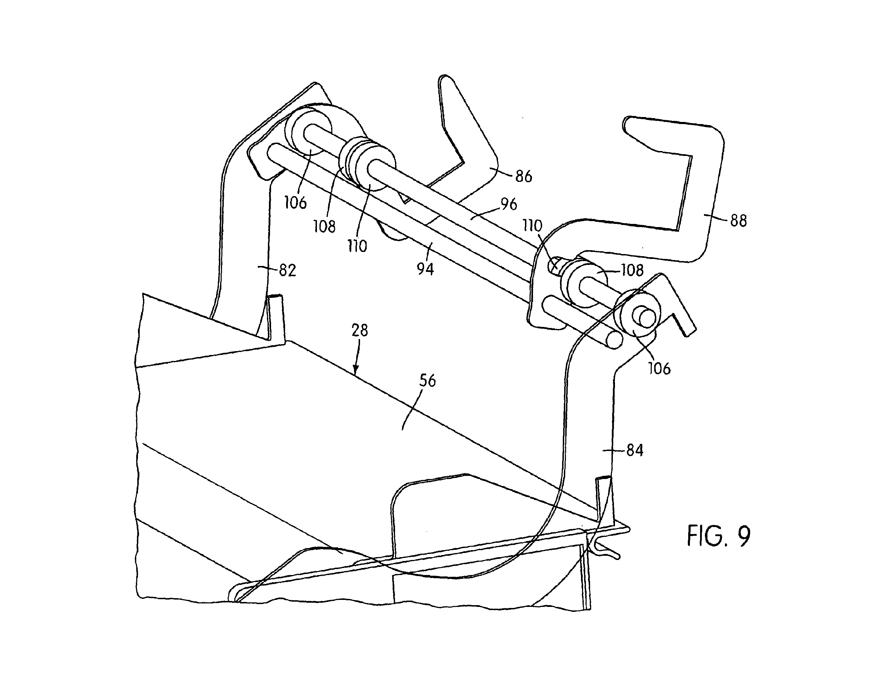

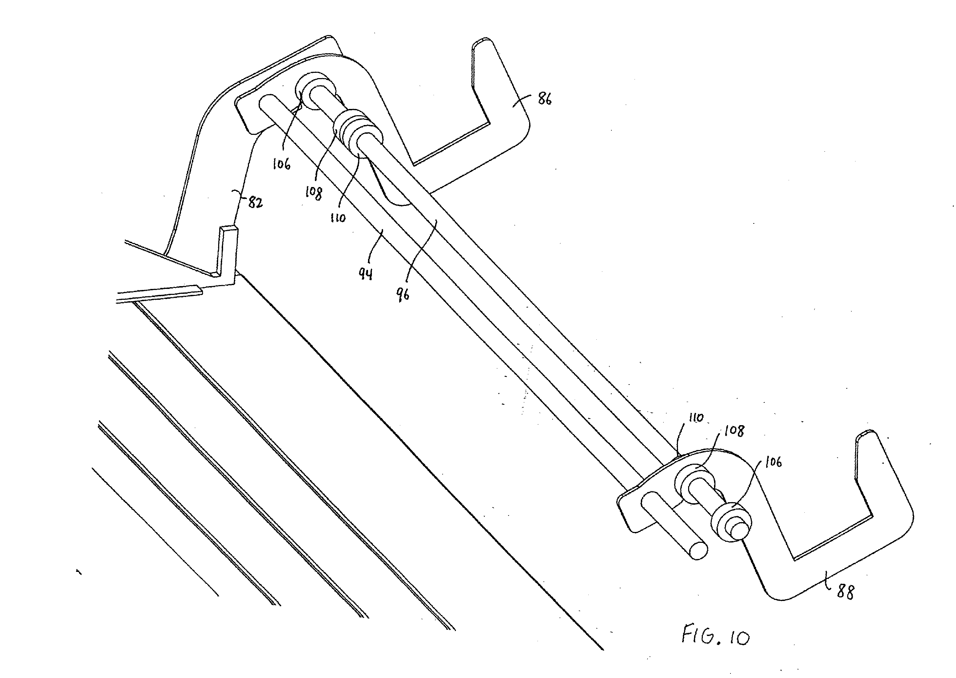

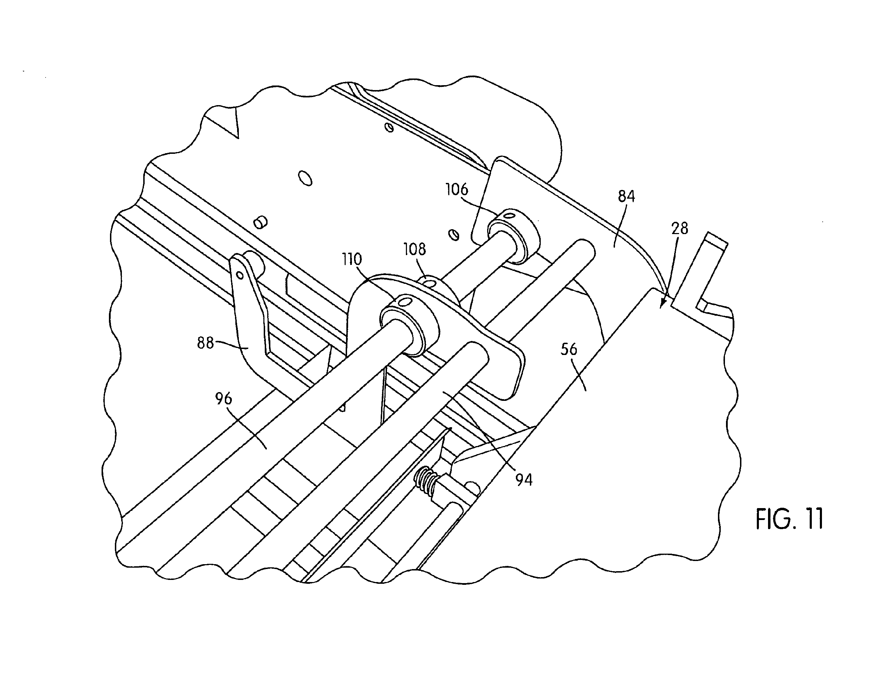

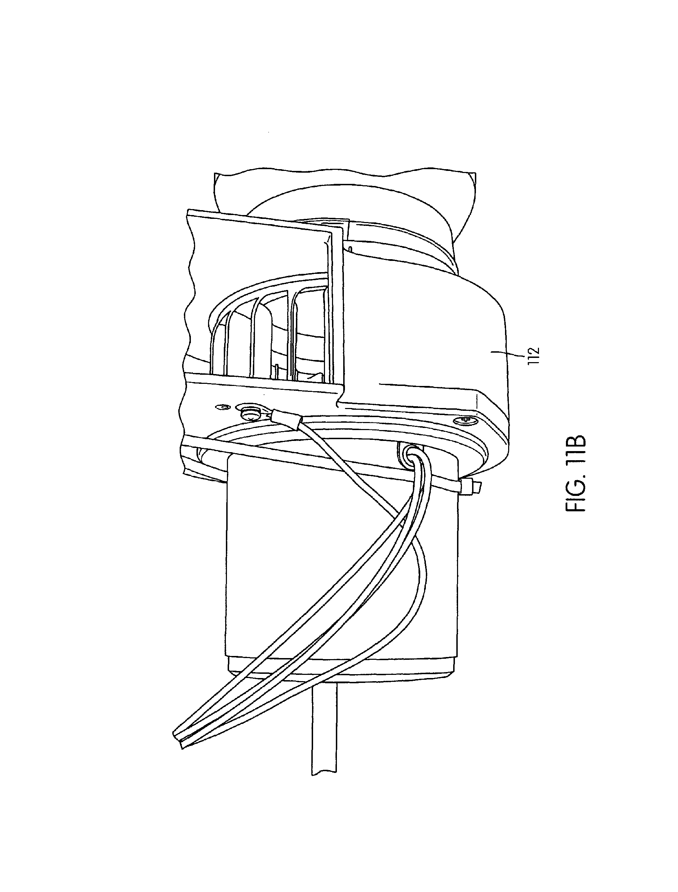

As shown in Figs. 5 and 6, a pair of retainers 108, 110 are also provided inwardly of each retainer 106. The cartridge holders 86, 88 are pivotally mounted to the bar 94 such that the cartridge holders 86, 88 may be pivoted in a direction away from the other bar 96 (see Figs. 7 and 8) and slid along the bar 94 until the cartridge holders 86, 88 are positioned adjacent the retainers 108, 110 (see Fig. 9). The cartridge holders 86, 88 may then be pivoted back down between the retainers 108, 110 until the other bar 96 engages within the recess 104 (see Figs. 10 and 11). Thus, the cartridge holders 86, 88 are movable between two positions to allow two different size cartridges to be used with the apparatus 10. For example, the cartridge holders 86, 88 may be positioned within the outer retainer 106 and the respective cam elements 82, 84 for larger cartridges, and the cartridge holders 86, 88 may be moved between the inner retainers 108, 110 for smaller cartridges.

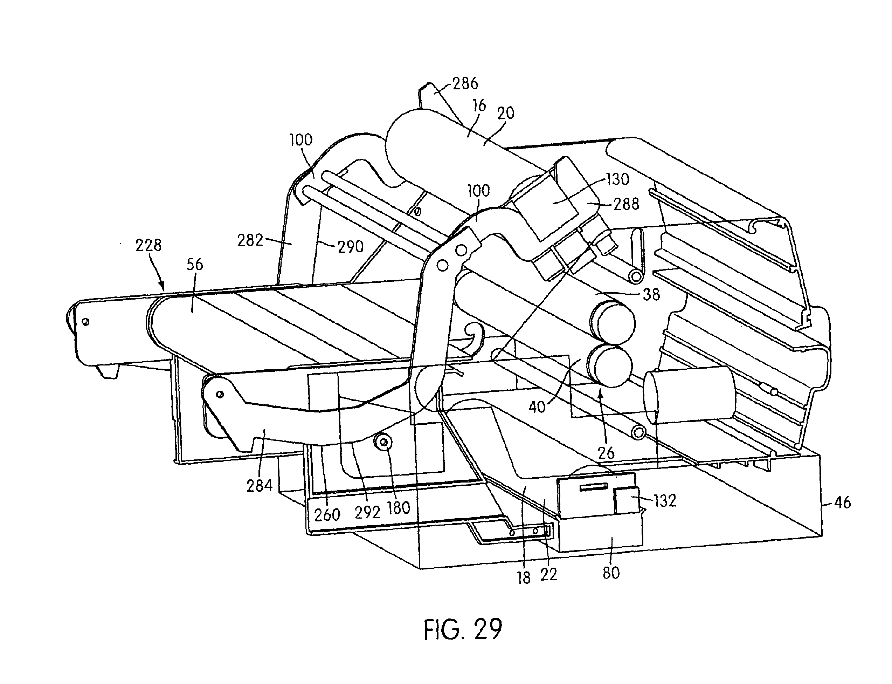

Each retainer 106, 108, 110 may be adjusted by loosening the fastener, sliding the retainer 106, 108, 110 along the bar 96 to the desired position, and tightening the fastener to secure the retainer 106, 108, 110 in the desired position. Thus, any size cartridge can be accommodated by the apparatus 10. Further, any number of pairs of retainers may be provided on the bar 96 to allow multiple predetermined cartridge settings. Moreover, as an alternative, the cartridge holders 86, 88 may be rigidly mounted to respective cam elements 82, 84 to only accommodate one size cartridge. Also, as best shown in Fig. 29, the mounting portion 100 of each cartridge holder 86, 88 may include two holes with the bars 94, 96 extending through respective holes. As a result, the cartridge holders 86, 88 may slide along both bars 94, 96 to accommodate different size cartridges.

A transparent cover 114 is movably connected to the frame 24 for movement between an open position (Figs. 12 and 12b) and a closed position (Fig. 1). When the cover 114 is in its open position, this allows a cartridge 12 to be moved into and out of an operative position with respect to the master processing assembly 26. When the cover 114 is in its closed position, this protects the user from heated nip rollers and allows the user to clearly view operation of the master processing assembly 26. As shown in Figs. 2 and 12, cover brackets 116 are rigidly secured to the sub-frame 30 by fasteners, for example. The cover 114 is rotatably connected to the brackets 116 for rotational movement about an axis. The cover 114 and brackets 116 are provided as part of the retrofitting kit along with the cartridge support assembly 28.

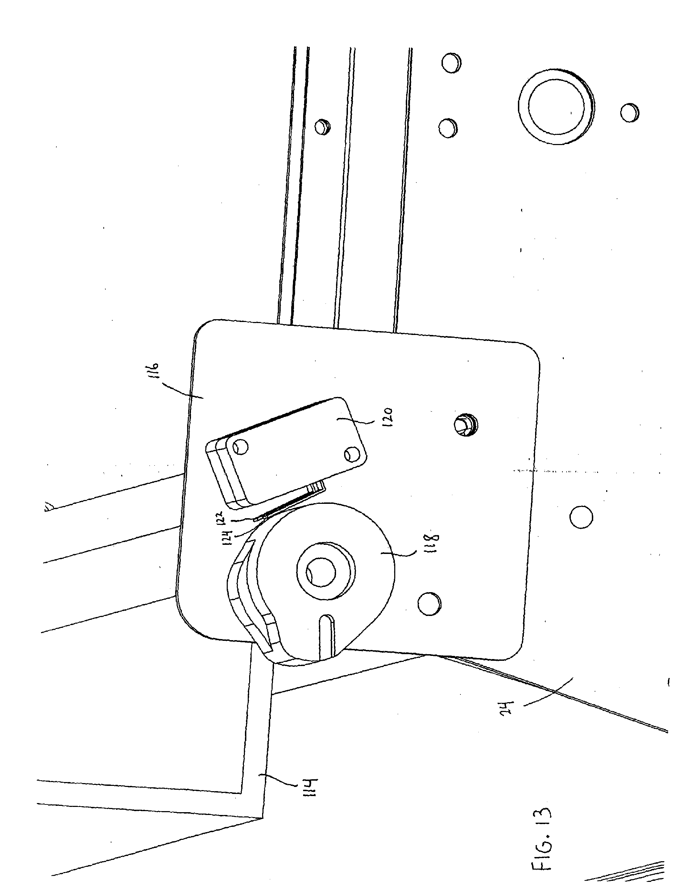

As shown in Fig. 13, a cam element 118 is mounted about the axis of the cover 114 such that the cam element 118 rotates along with the cover 114 about the axis. A switch unit 120 is rigidly mounted to the bracket adjacent the cam element 118. The cam element 118 is structured to selectively engage switches 122, 124 of the switch unit 120 depending on the position of the cover 114. The switches 122, 124 are configured to control certain functions of the apparatus 10, as will be further discussed. The cam element 118 and switch unit 120 are provided as part of the retrofitting kit along with the cover 114.

As shown in Figs. 1, 2, and 12b, a guard 129 is pivotally mounted to the cover 114 by a hinge 131. The guard 129 is provided as part of the retrofitting kit along with the cover 114. As shown in Fig. 1, when the cover 114 is in a closed position, the guard 129 covers the upper nip roller 38 so as to protect the users from inadvertent engagement with a heated nip roller 38.

The feed rolls 16, 18 are mounted in the cartridge body 14 of a cartridge 12 that is removably mounted to the cartridge support assembly 28. The cartridge support assembly 28 receives the cartridge 12 in a top-loading manner wherein the cartridge 12 is dropped vertically downwardly into the cartridge support assembly 28, as will be further discussed.

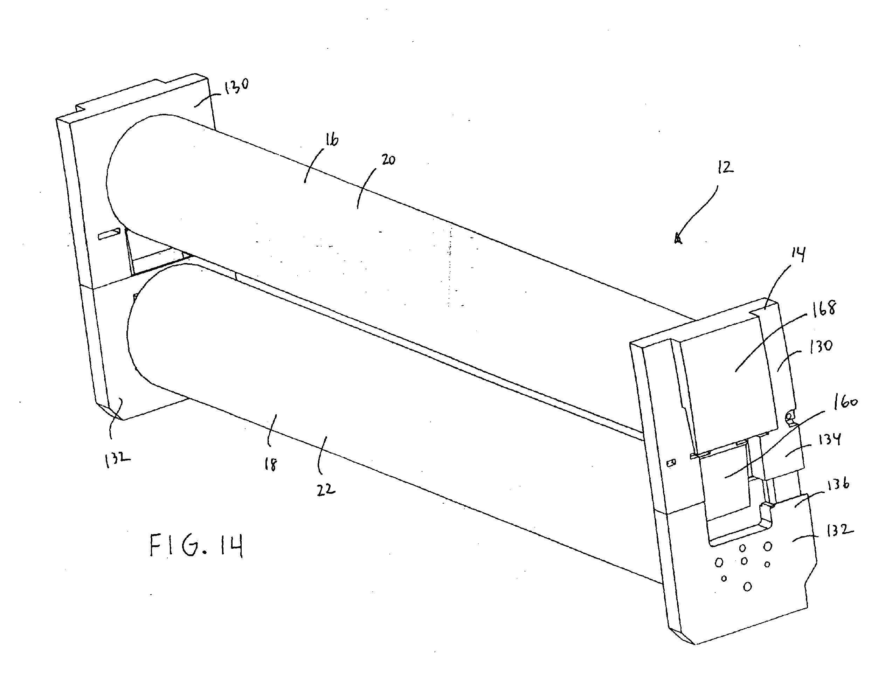

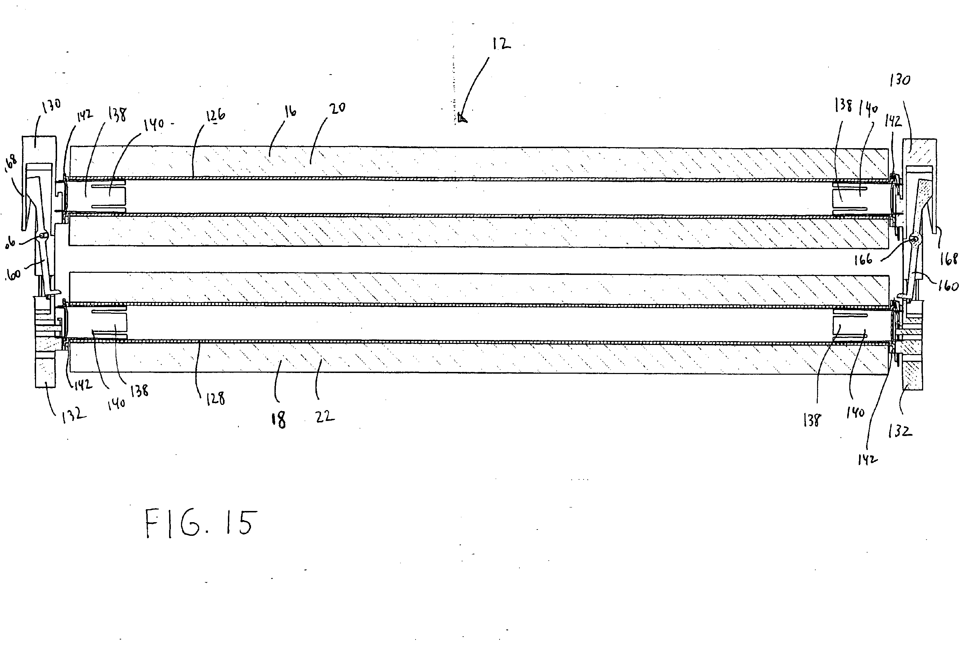

As shown in Fig. 14, the cartridge body 14, preferably made of a suitable molded plastic, is constructed and arranged to be removably mounted to the cartridge support assembly 28. The feed rolls 16, 18 each carrying a supply of the stock materials 20, 22 are rotatably mounted to the cartridge body 14 to enable the stock materials 20, 22 to be unwound from their respective feed rolls 16, 18 and placed between the nip rollers 38, 40. Each roll of stock material 20, 22 (or substrate) is comprised of a long, continuous strip of stock material wound around a central tubular core 126, 128, as shown in Fig. 15. The cores 126, 128 may be made of heavy cardboard or any other suitable material. The cores 126, 128 are rotatably mounted in the cartridge body 14.

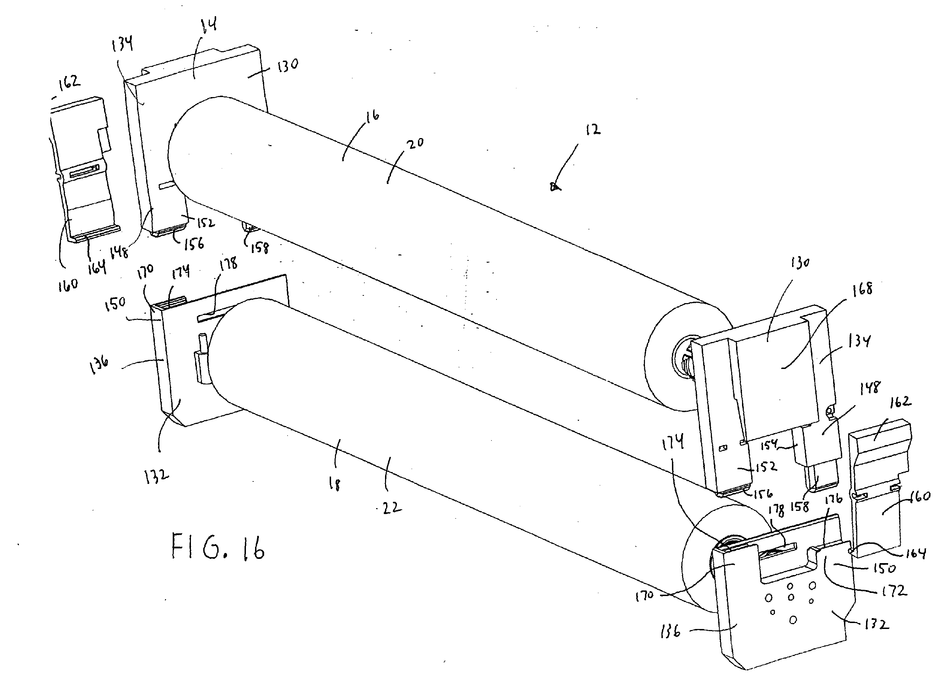

As shown in Figs. 14 and 16, the cartridge body 14 includes two portions 130, 132 removably coupled together. One of the feed rolls 16, 18 is mounted to one of the two portions 130, 132 and the other of the feed rolls 16, 18 is mounted to the other of the two portions 130, 132. One portion 130 includes a pair of first feed roll supports 134 and the other portion 132 includes a pair of second feed roll supports 136. In the illustrated embodiment, the first feed roll supports 134 are positioned on opposite sides of the feed roll 16 to rotatably receive the feed roll 16 therebetween. The second feed roll supports 136 are positioned on opposite sides of the other feed roll 18 to rotatably receive the feed roll 18 therebetween.

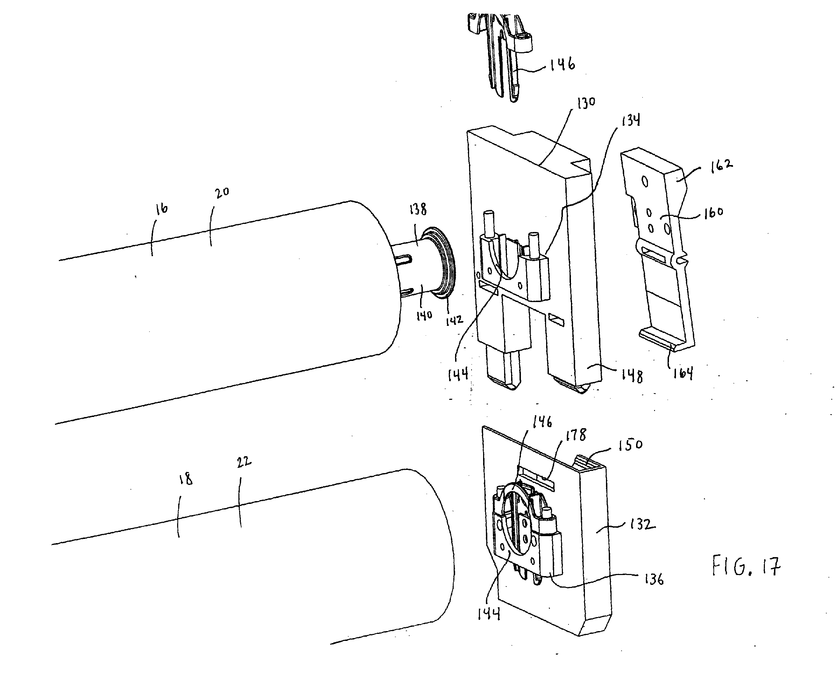

As shown in Fig. 17, each end of the cores 126, 128 includes a hub 138. The hub 138 has a tubular portion 140 with an annular protrusion 142. Each end of the cores 126, 128 is positioned over the tubular portion 140 to secure the respective feed rolls 16, 18 to the hubs 138. Each feed roll support 134, 136 includes a supporting portion 144 that is structured to rotatably receive the annular protrusion 142 of the hub 138. A clip 146 is mounted to the supporting portion 144 such that the hub 138 is rotatably mounted between the supporting portion 144 and the clip 146. However, the feed rolls 16, 18 may be rotatably mounted in the cartridge body 14 in any other suitable manner.

As shown in Figs. 15-18, one portion 130 provides a first lock structure 148, and the other portion 132 provides a second lock structure 150 such that the first and second lock structures 148, 150 are interlockable with one another to removably couple the portions 130, 132 together.

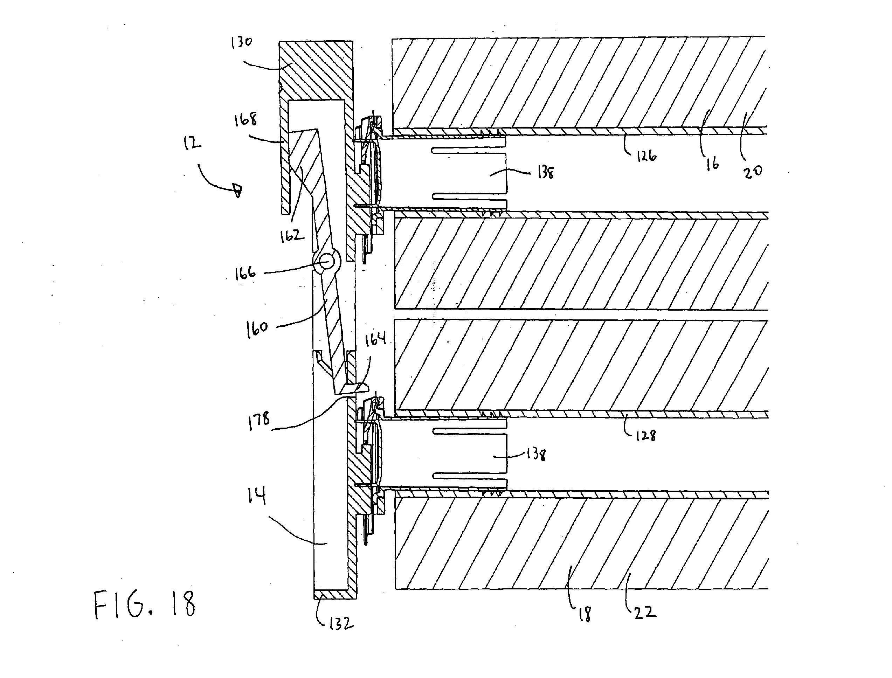

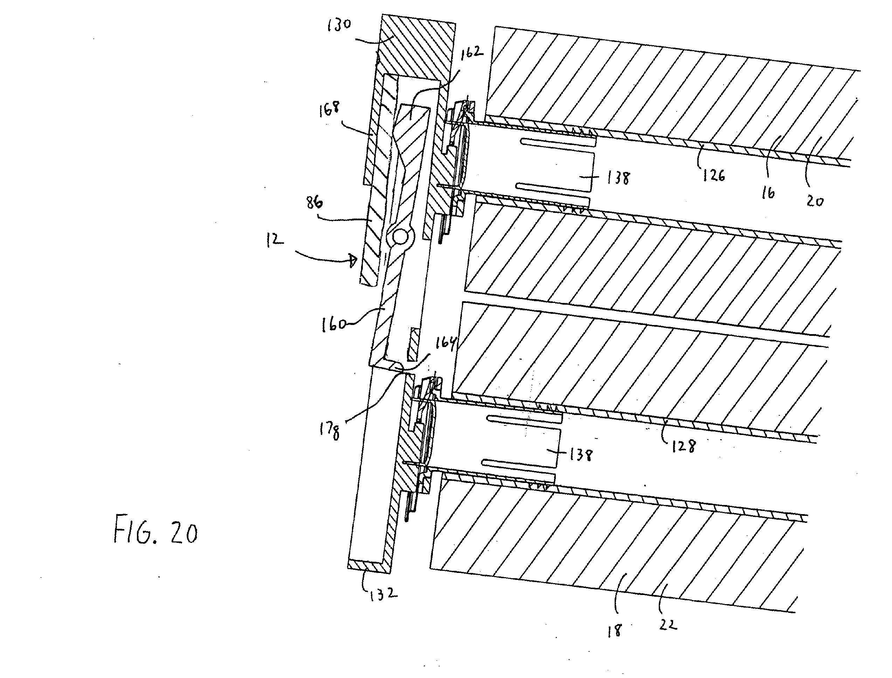

The first lock structure 148 includes a pair of outwardly extending portions 152, 154 that provide a pair of outwardly extending tabs 156, 158 on the free ends thereof. The first lock structure 148 also includes a latch 160 that is pivotally mounted to the portion 130 for movement between a locking position (Fig. 18) and a releasing position (Fig. 20). The latch 160 includes a protrusion 162 on one end portion and a tab 164 on the opposite end portion. A pin 166 extends through an intermediate portion of the latch 160. The ends of the pin 166 are secured within recesses provided in the portion 130 to secure the latch 160 to the portion 130 and allow the aforesaid pivotal movement. A spring (not shown) is positioned between the latch 160 and the portion 130 to bias the latch 160 to the locked position. Further, the portion 130 includes an outer wall 168 that surrounds the upper half of the latch 160 including the protrusion 162. The protrusion 162 is engaged with the outer wall 168 when the latch 160 is biased to the locked position, as shown in Fig. 18. The outer wall 168 prevents inadvertent movement of the latch 160 from the locked position to the releasing position by the user, but is an optional feature.

The second lock structure 150 includes a pair of outwardly spaced portions 170, 172 that provide a pair of recesses 174, 176 on the free ends thereof. The portion 132 also includes a side wall having an opening 178 therethrough that forms a part of the second lock structure 150.

As shown in Fig. 18, the portion 130 is engaged with the other portion 132 such that the pair of outwardly extending tabs 156, 158 of the first lock structure 148 engage within respective recesses 174, 176 of the second lock structure 150. Moreover, the tab 164 on the latch 160 protrudes through the opening 178 in the side wall of the portion 132. As a result, the portions 130, 132 are removably coupled to one another. With the feed rolls 16, 18 removably coupled to one another, shipping of feed rolls 16, 18 is facilitated and removal and replacement of feed rolls 16, 18 to the apparatus 10 is facilitated. The cartridge 12 is structured to be separated into two separate portions 130, 132 by the cartridge support assembly 28 during mounting of the cartridge 12 to the apparatus 10, as will be further discussed. However, it should be understood that any suitable construction or configuration for the cartridge may be used and the one illustrated is not intended to be limiting.

Operation of the master processing apparatus 10 will now be described in greater detail. The operation will be described in reference to Figs. 19-22. The cartridge support assembly 28 is movable from a cartridge receiving position to a cartridge operating position. In the cartridge receiving position as shown in Fig. 19, the cartridge support assembly 28 is moved to a position extending outwardly from the frame 24 to allow the cartridge 12 to be mounted by dropping the cartridge 12 vertically downwardly into the cartridge support assembly 28.

The cartridge 12 is mounted with the two portions 130, 132 removably coupled together to the cartridge support assembly 28 in its cartridge receiving position as shown in Fig. 19. The cover 114 is moved to the open position. When the cartridge 12 is loaded to the cartridge support assembly 28, the portion 132 of the cartridge body 14 rests on the bottom of the cartridge seat 80 and the upper portion 130 of the cartridge body 14 engages the U-shape portion 98 of respective cartridge holders 86, 88. As shown in Fig. 20, each cartridge holder 86, 88 (only the cartridge holder 86 being visible) extends within the outer wall 168 of the portion 130 and engages the latch 160 so as to pivot the latch 160 against biasing thereof from the locked position in Fig. 18 to the releasing position in Fig. 20. As a result, the tab 164 on the latch 160 pivots out of the opening 178 in the portion 132 so as to release the portions 130, 132 from one another. Thus, the portions 130, 132 may be moved away or separated from one another.

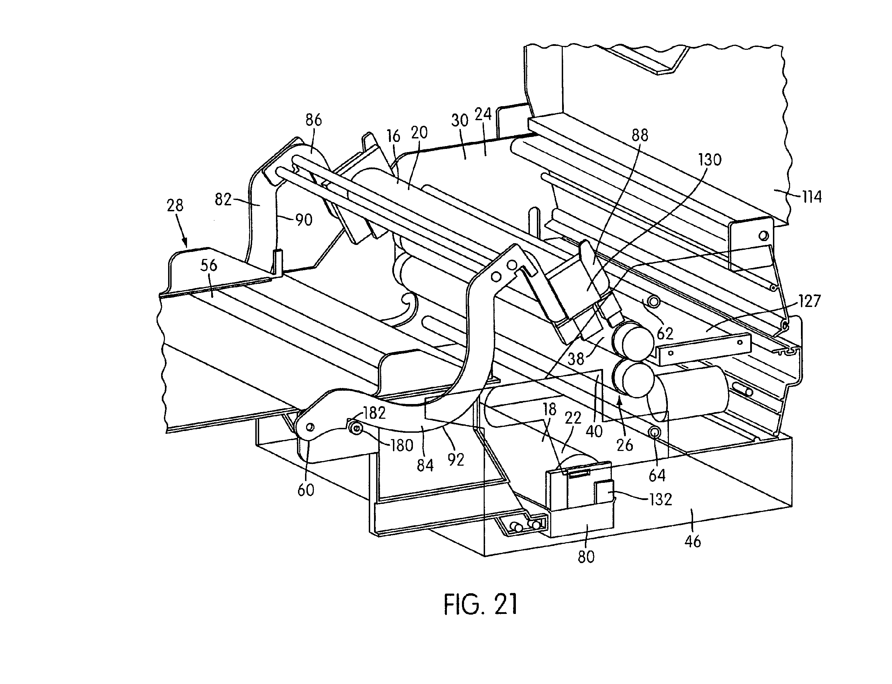

The cartridge support assembly 28 is constructed such that, as the cartridge support assembly 28 is moved from the cartridge receiving position to the cartridge operating position thereof, the cartridge support assembly 28 separates the two portions 130, 132 of the cartridge body 14 from one another and individually positions each of the two portions 130, 132 of the cartridge body 14 in individual operative positions (Fig. 22) wherein the stock materials 20, 22 on each of the feed rolls 16, 18 can be fed into the master processing assembly 26 for performance of the master processing operation, thereby establishing the operative position of the cartridge 12. Specifically, as the cartridge support assembly 28 is moved to the cartridge operating position, the cam elements 82, 84 ride along the bearings 180 provided on the bottom frame structure 46. The cam surfaces 90, 92 of the cam elements 82, 84 are suitably contoured such that, as the cartridge support assembly 28 is moved to the cartridge operating position, the cam elements 82, 84 separates the upper portion 130 from the lower portion 132 and lifts the upper portion 130 up and over the upper nip roller 38, as shown in Fig. 21. Specifically, the cam elements 82, 84 ride up the bearings 180 so as to be raised upwardly as the support assembly 28 is pushed inwardly. Further, the lower portion 132 moves inwardly along with the cartridge seat 80 below the lower nip roller 40, as shown in Fig. 21. As the cartridge support assembly 28 reaches the cartridge operating position, the bearings 180 engage stop portions 182 provided on the cam elements 82, 84. Fig. 22 illustrates the two portions 130, 132 of the cartridge body 14 in their individual operative positions. Fig. 23 is a top view that illustrates the portion 130 in its individual operative position. Further, when the cartridge support assembly 28 is in the cartridge operating position, the feed tray 56 is positioned adjacent the input side of the master processing assembly 26.

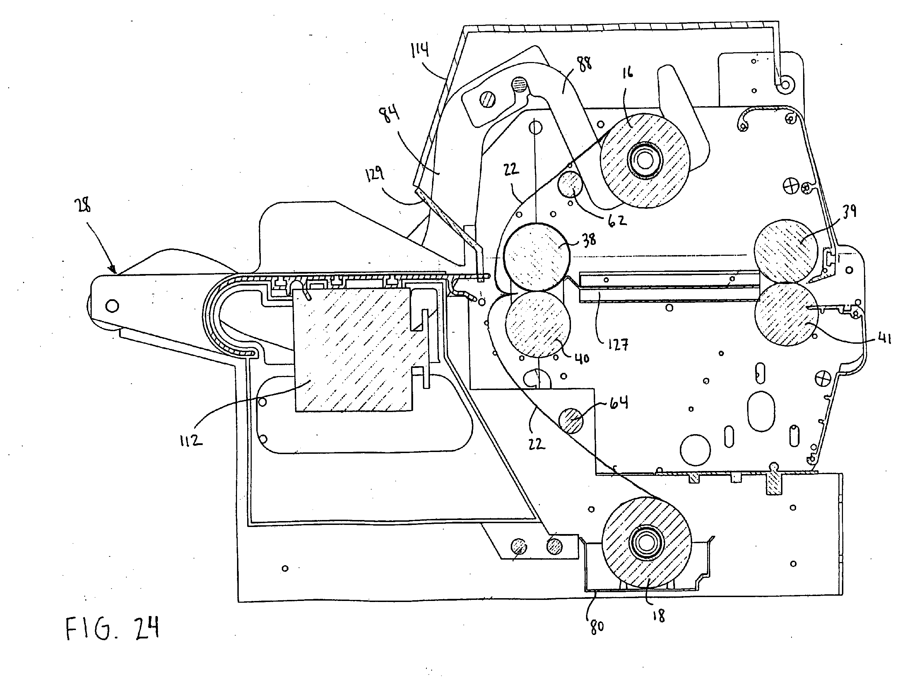

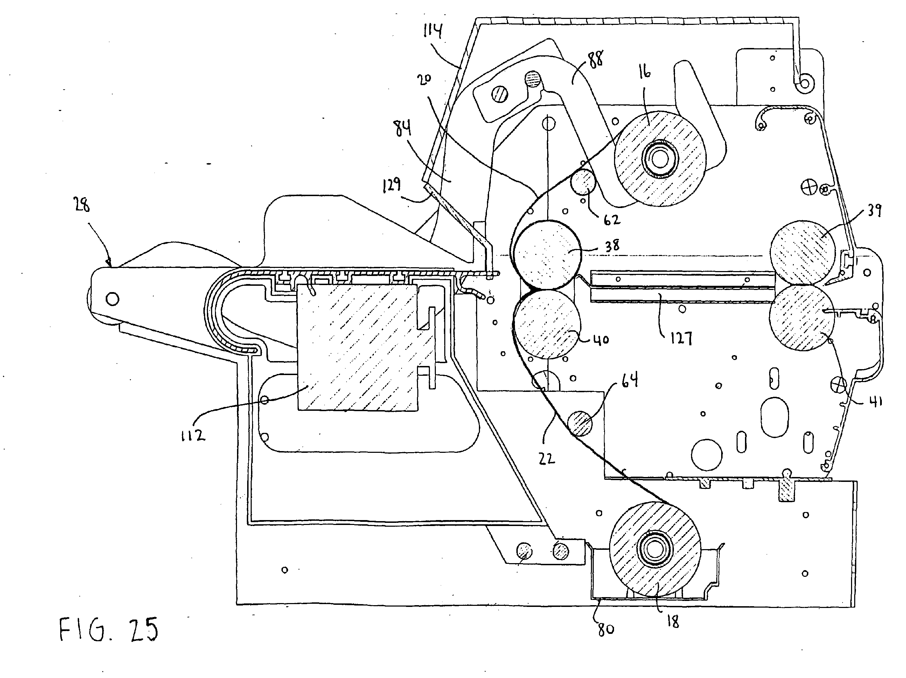

As shown in Figs. 1, 11b, 24, and 25, a fan 112 is mounted beneath the feed tray 56 of the cartridge support assembly 28. The fan 112 is provided as part of the retrofitting kit along with the cartridge support assembly 28. After the cartridge support assembly 28 is moved to the cartridge operating position with the two portions 130, 132 of the cartridge body 14 in their individual operative positions, the fan 112 blows air towards the nip rollers 38, 40 to thread the stock material 20, 22 from the feed rolls 16, 18 into the nip rollers 38, 40. Specifically, as shown in Fig. 24, when the two portions 130, 132 of the cartridge body 14 reach their individual operative positions, the end portions of the stock materials are spaced from the input side of the nip rollers 38, 40. Once the two portions 130, 132 are in their individual operative positions, the fan 112 is controlled to blow air into the stock materials 20, 22 which forces the end portions of the stock materials 20, 22 into engagement with the nip rollers 38, 40, as shown in Fig. 25. The fan may be manually controlled or may be controlled to operate for a predetermined period of time, e.g., 30 seconds, and then automatically shut-off. The fan 112 allows users to safely load cartridges and the feed rolls thereof while heated nip rollers are hot because the users do not have to manually thread the stock material from the feed rolls into the nip rollers. Thus, the fan 112 allows auto-threading of the stock material 20, 22 from the feed rolls 16, 18 into the nip rollers 38, 40. The presence of the fan, however, should not be considered limiting and is an optional feature.

As shown in Fig. 25, the stock material 20 extends from the feed roll 16 down around the nip roller 38 and into engagement with the end portion of the stock material 22 adjacent the feed side of the master processing assembly 26. Similarly, the stock material 22 extends from the feed roll 18 up and around the nip roller 40 and into engagement with the end portion of the stock material 20 adjacent the feed side of the master processing assembly 26. The guide bars 62, 64 are positioned to engage the stock materials 20, 22 of the feed rolls 16, 18 so as to space the stock materials 20, 22 away from the nip rollers 38, 40 and guide the stock materials 20, 22 towards the feed side of the master processing assembly 26.

When a used cartridge is to be removed from the apparatus 10, the user reverses the rotating direction of the nip rollers 38, 40 to withdrawal the stock materials 20, 22 out of the second set of nip rollers 39, 41 and out of the feed side of the nip rollers 38, 40. The fan 112 is controlled to blow air into the stock materials 20, 22 as they are being withdrawn out the feed side of the master processing assembly 26. The fan 112 cools the stock materials as they exit the heated nip rollers 38, 40 so as to cool the adhesive to prevent the stock materials from inadvertently adhering to objects. Cooling the materials as such is an optional feature and should not be considered limiting.

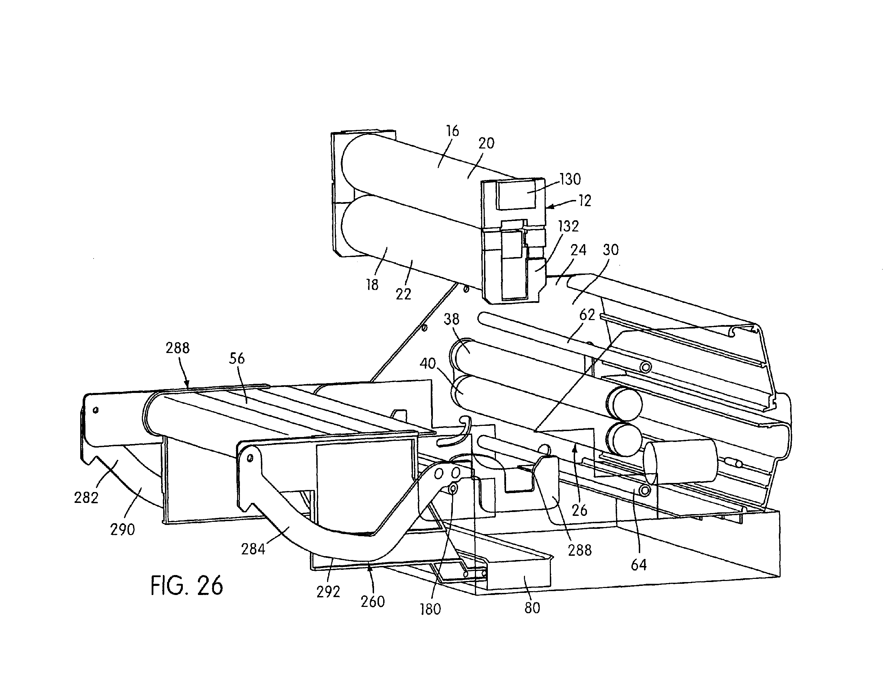

Figs. 26-30 illustrate another embodiment of the cartridge support assembly, indicated as 228, being moved from the cartridge receiving position to the cartridge operating position. Specifically, the cartridge support assembly 228 in Figs. 26-30 includes another embodiment of the cartridge support structure indicated as 260. The cam elements 282, 284 of the cartridge support structure 260 have a different contour than the cam elements 82, 84 of cartridge support structure 60. Further, the cartridge holders 286, 288 of the cartridge support structure 260 are mounted to the support bars 94, 96 differently and have a slightly different configuration than the cartridge holders 86, 88 of cartridge support structure 60. The remaining components of the apparatus 10 are substantially similar and are indicated with similar reference numerals.

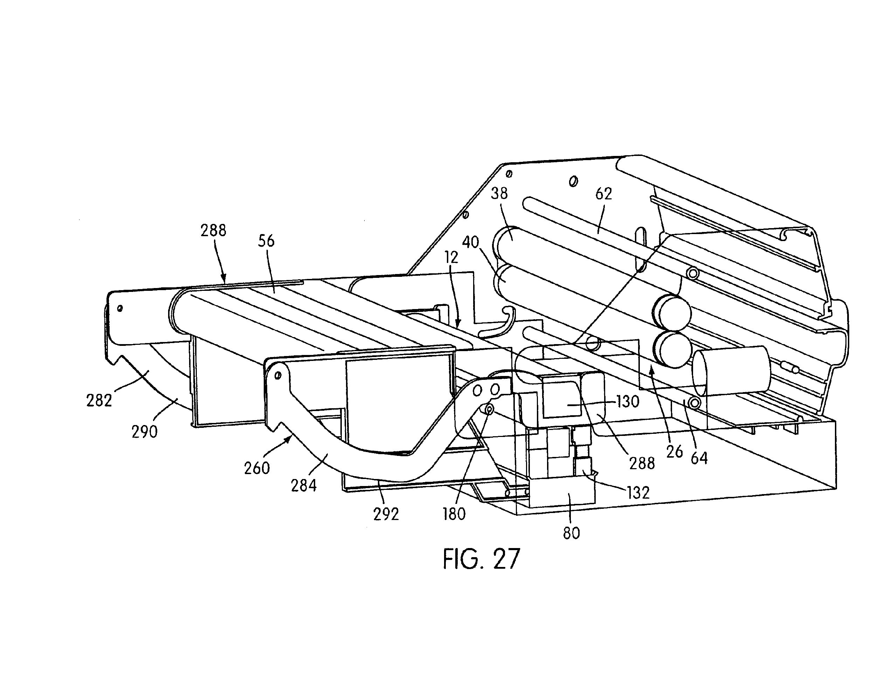

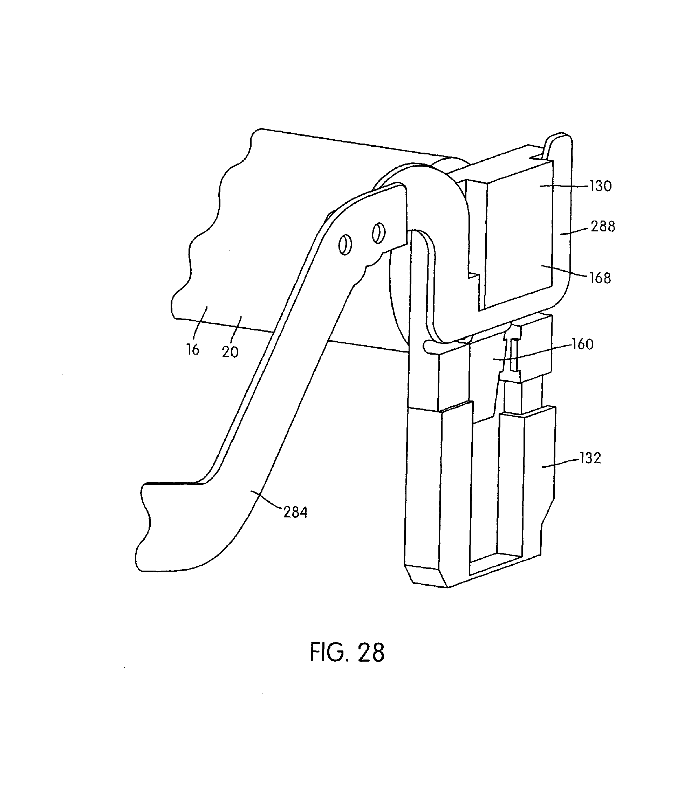

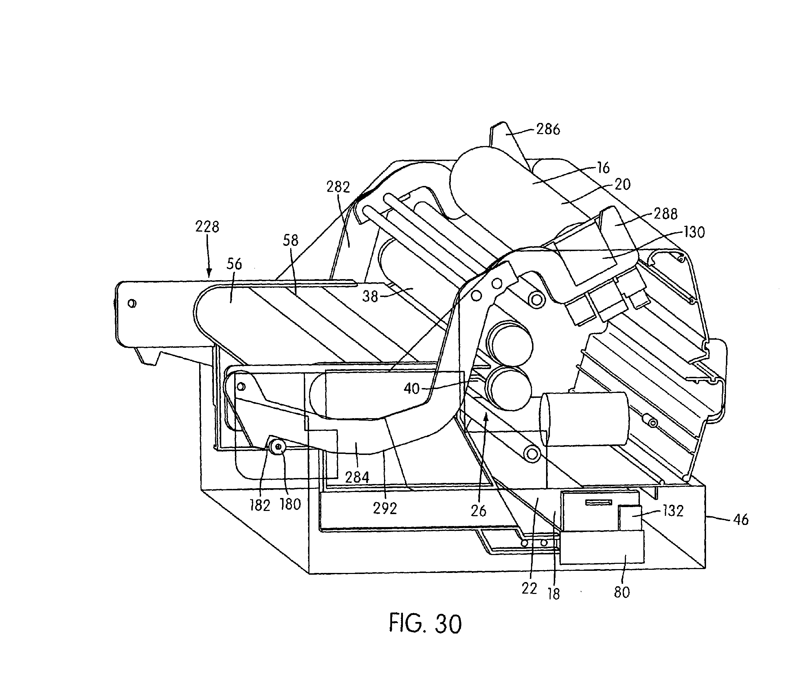

The cartridge support structures 60, 260 both function in substantially the same manner. Specifically, Fig. 26 shows the cartridge 12 being loaded to the cartridge support assembly 28, Fig. 27 shows the portion 132 of the cartridge body 14 resting on the bottom of the cartridge seat 80 and the upper portion 130 of the cartridge body 14 engaged with respective cartridge holders 286, 288, Fig. 28 shows the cartridge holder 288 extending within the outer wall 168 of the portion 130 so as to engage the latch 160 for releasing the portions 130, 132 from one another, Fig. 29 shows the cam surfaces 290, 292 of the cam elements 282, 284 riding along respective bearings 180, and Fig. 30 shows the portions 130, 132 of the cartridge body 14 in their individual operative positions.

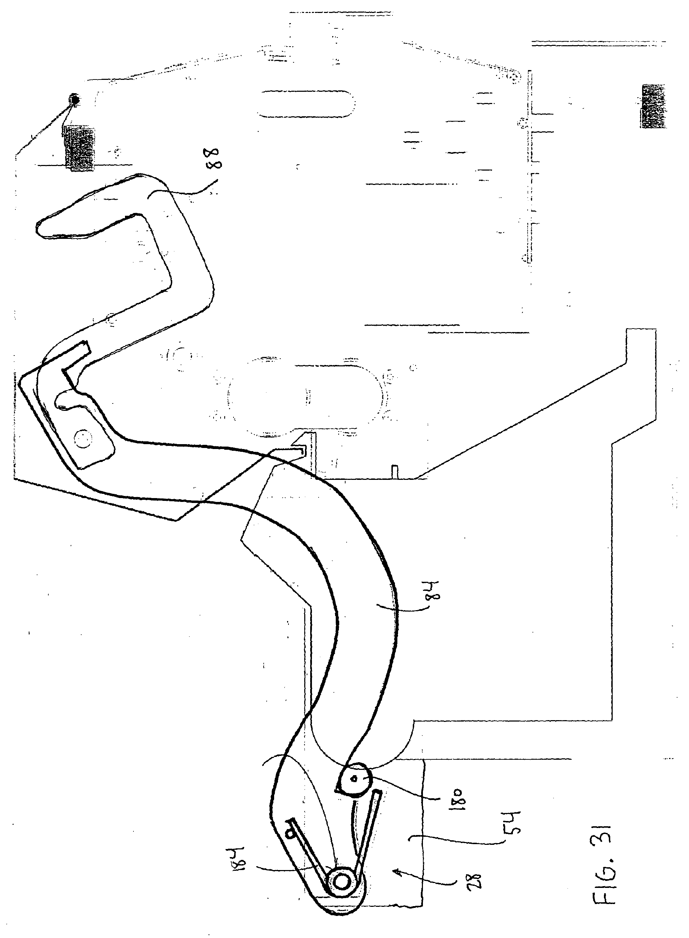

As shown in Fig. 31, a torsion spring 184 may be mounted between the cam elements 82, 84 and the side walls 52, 54 to provide a biasing force to assist the user in lifting the cam elements 82, 84 during movement to the cartridge operating position. As best shown in Figs. 1 and 3, a handle 186 may be mounted across the support bars 94, 96 to assist the user in lifting the cam elements 82, 84.

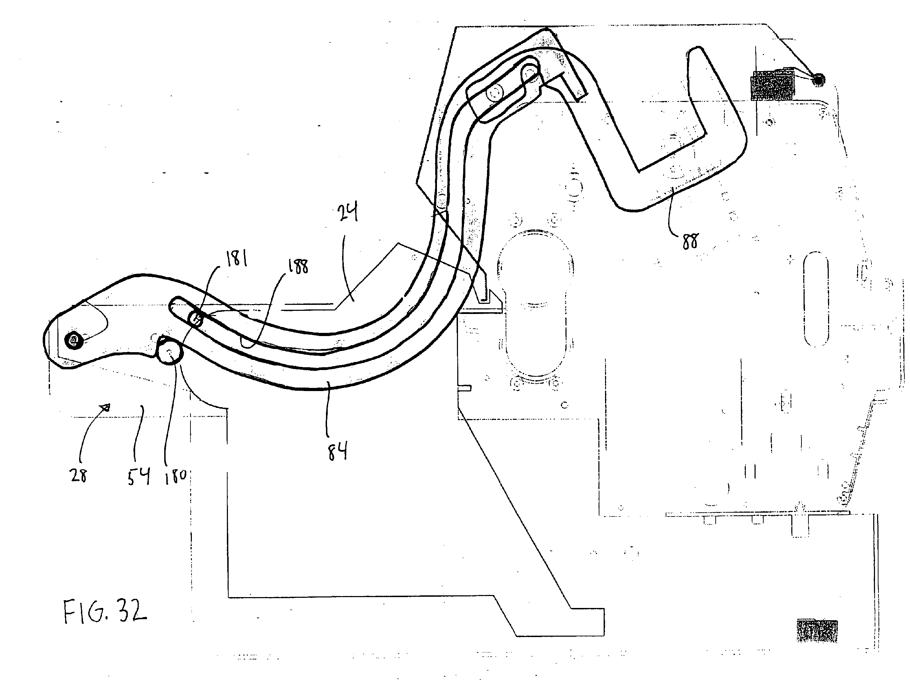

As shown in Fig. 32, the cam elements 82, 84 may have a contoured slot 188 throughout the length thereof. A pin 181 provided on the frame 24 would engage within respective slots 188 such that as the cartridge support assembly 28 is moved to the cartridge operating position, the pins 181 would slide within respective slots 188 to guide the cam elements 82, 84 to move the upper portion 130 up and over the nip roller 38. Bearings 180 may also be provided to guide cam elements 82, 84. Moreover, the position of the pins 181 within respective slots 188 prevents a user from over-pivoting the cam elements 82, 84 and having the cartridge 12 fall back and then out of the cartridge holders.

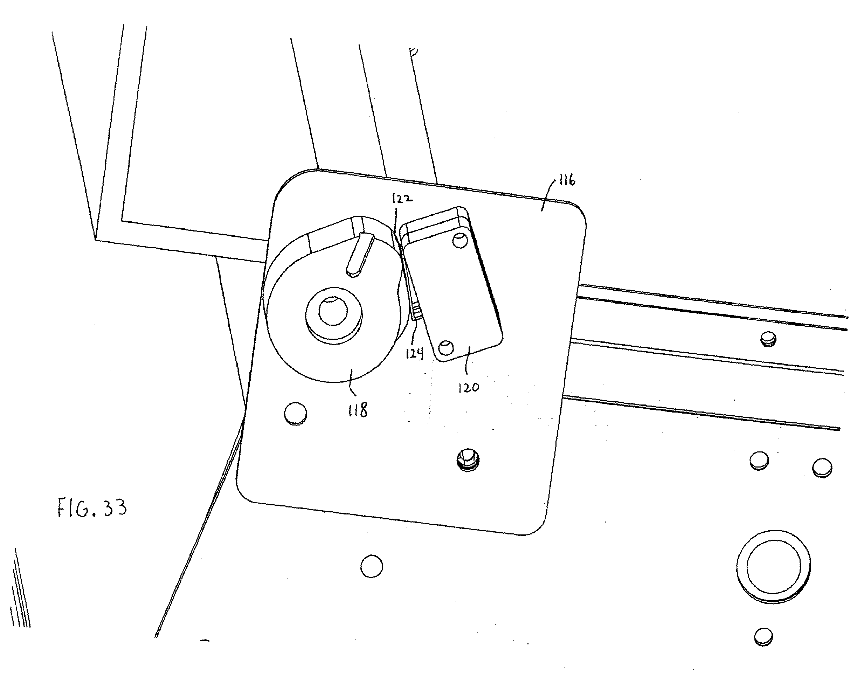

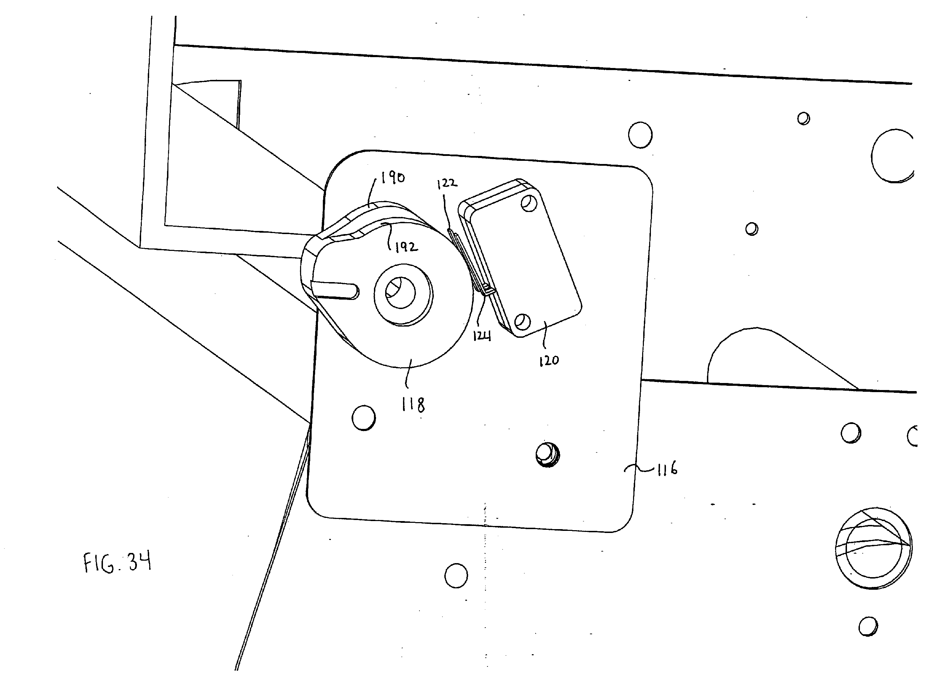

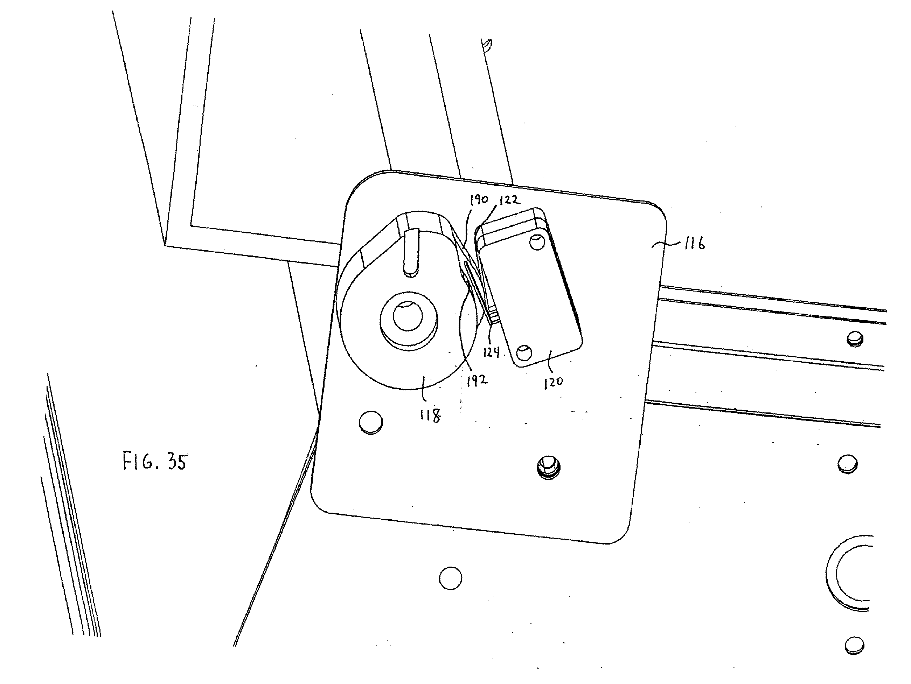

When the cartridge support assembly 28 is in the cartridge operating position, the cover 114 may be moved to the closed position to operate the master processing assembly 26. As noted above, the cam element 118 rotates along with the cover 114. The cam element 118 includes first and second cam surfaces 190, 192. The first and second cam surfaces 190, 192 have different contours. The switches 122, 124 of the switch unit 120 are positioned adjacent respective cam surfaces 190, 192. The cam surfaces 190, 192 are contoured such that the cam surfaces 190, 192 selectively engage respective switches 122, 124 depending on the position of the cover 114. The switches 122, 124 are configured to control certain functions of the apparatus 10. For example, when the cover 114 is in the closed position, the cam element 118 is positioned such that both cam surfaces 190, 192 thereof are engaged with respective switches 122, 124 which allows operation of the master processing assembly 26, as shown in Fig. 33. When the cover 114 is in the open position, the cam element 118 is positioned such that both cam surfaces 190, 192 thereof are spaced away from respective switches 122, 124 which prevents the master processing assembly 26 from being operated, as shown in Fig. 34. Fig. 35 shows a position of the cam element 118 in which the switch 122 is engaged with the cam surface 190 and the switch 124 is spaced away from the cam surface 190.

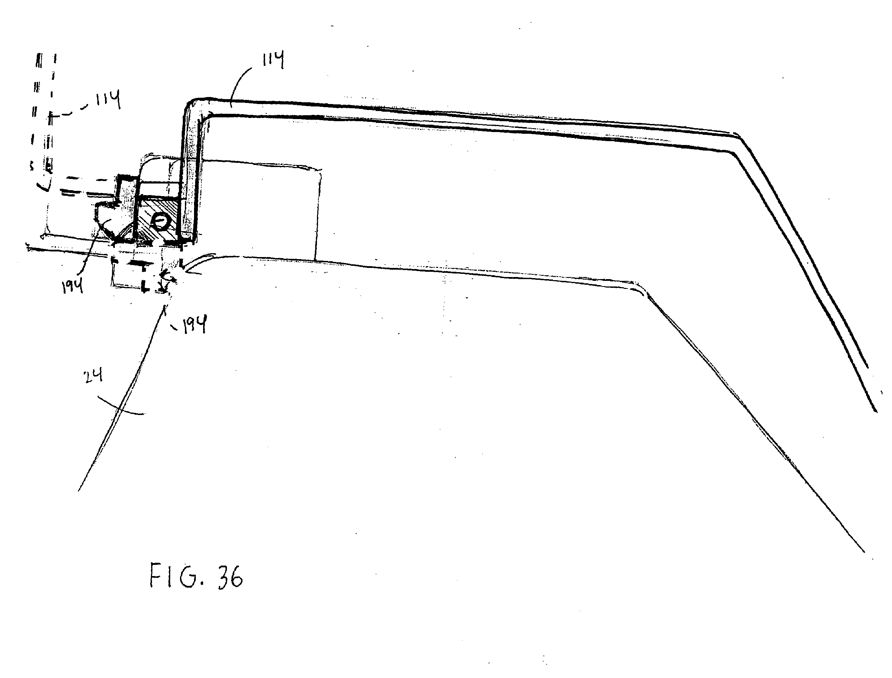

An additional cover may be provided to cover the cam element 118 and switch unit 120 so as to prevent the user from engaging the switches 122, 124. Further, as shown in Fig. 36, the cover 114 may include a rubber stop member 194 to rest against the back of the frame 24 when the cover 114 is moved to the open position (in dashed lines).

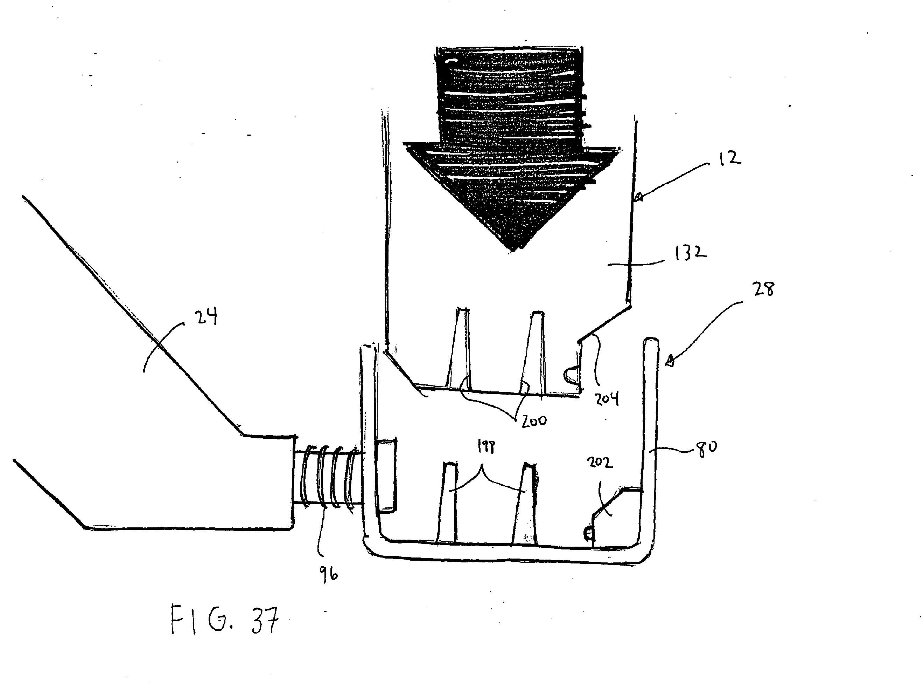

As shown in Fig. 37, a biasing structure, such as a spring 196, may be provided to urge or reject the cartridge support assembly 28 towards the cartridge receiving position. Specifically, one or more compression springs 196 may be mounted between the cartridge support assembly 128 and the frame 24/bottom frame structure 46. When the cartridge support assembly 28 is in the cartridge receiving position, the springs 196 urge the cartridge support assembly 28 outwardly from the frame 24. When the cartridge support assembly 28 is in the cartridge operating position, the springs 196 are compressed between the cartridge support assembly 28 and the frame 24/bottom frame structure 46. These springs are optional.

Further, the cartridge seat 80 may be structured to stably support the portion 132 of the cartridge 12 during movement between the cartridge receiving position and the cartridge operating position. As shown in Fig. 37, the cartridge seat 80 may include a pair of protrusions 198 that engage within recesses 200 provided in the portion 132 of the cartridge 12 to keep the portion 132 stationary during movement. Also, the cartridge seat 80 may include a protrusion 202 along the side wall thereof that engages within a corresponding recess 204 provided in the portion 132 of the cartridge 12. The positioning of the protrusion 202 in the cartridge 12 ensures that the cartridge 12 is properly oriented within the cartridge seat 80 so as to prevent the cartridge 12 from being loaded in the cartridge seat 80 backwards, for example. These protrusions are optional and not to be considered limiting.

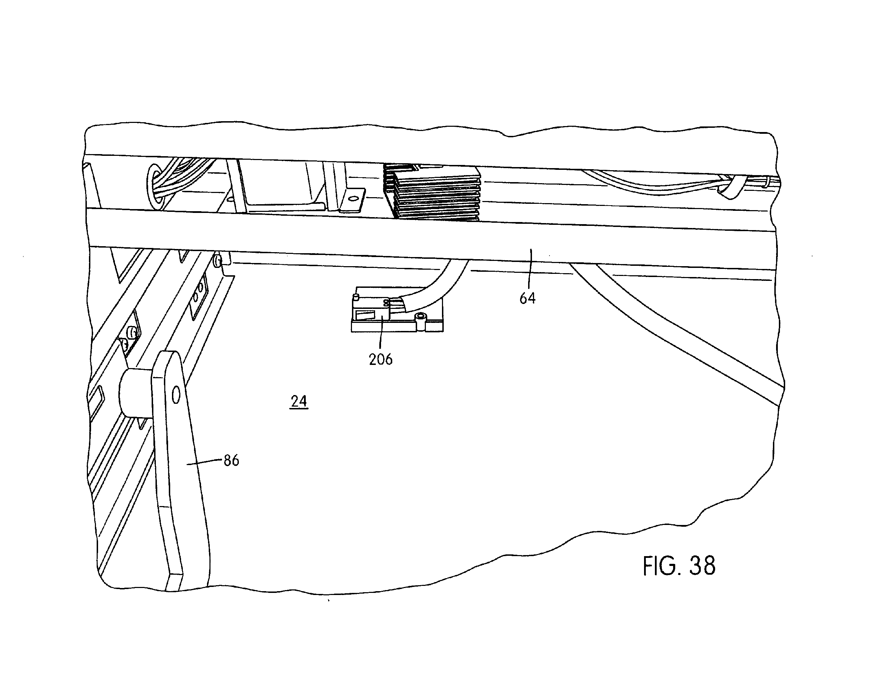

As shown in Fig. 38, a switch unit 206 may be provided within the frame 24 to provide feedback regarding the position of the cartridge support assembly 28. Specifically, the switch unit 206 may be activated when the cartridge support assembly 28 reaches the operating position. The switch unit 206 may send a signal to a controller that signals the controller that the cartridge support assembly 28 is in the cartridge operating position. The controller may also receive a signal from the switch unit 120 regarding the position of the cover 114. The controller may then control operation of the master processing assembly 26 and/or fan 112 depending on the signals received from the switch units 120, 206. The use of these switch units are optional and not to be considered limiting.

For example, when the cartridge support assembly 28 is in the cartridge operating position and the cover 114 is in the closed position, the controller allows operation of master processing assembly 26. When the cartridge support assembly 28 is in the cartridge operating position and the cover 114 is in the open position, the controller prevents operation of master processing assembly 26. When the cartridge support assembly 28 is in the cartridge receiving position and the cover 114 is in the open position, the controller prevents operation of master processing assembly 26. When the cartridge support assembly 28 is in the cartridge receiving position and the cover 114 is in the closed position, the controller prevents operation of master processing assembly 26. Further, when the cartridge support assembly 28 is in the cartridge receiving position and the cover 114 is in a substantially closed position, the controller allows operation of master processing assembly 26. However, the controller may be configured in any other suitable manner to control operation of the master processing assembly 26.

Once the cartridge support assembly 28 is in the cartridge operating position with the end portions of the stock materials 20, 22 threaded into the nip rollers 38, 40 and the cover 114 is moved to the closed position, a document or other master to be covered with stock material may be placed on the substrate support surface 58 of the feed tray 56 and pushed through the feed opening 48 in the frame 24 until the document comes in contact with the unwound end portions of the stock materials 20, 22. At least one of the unwound end portions of the stock materials 20, 22 is coated with an heat-activated adhesive. The user then actuates the motor to rotate the heated nip rollers 38, 40, via an electronic control pad 208 (Fig. 1) for example, which causes the heated nip rollers 38, 40 of the master processing assembly 26 to rotate so as to drive the master and the stock materials 20, 22 therebetween outwardly towards the discharge opening 50 in the frame 24. As the stock materials 20, 22 pass between the heated nip rollers 38, 40, the nip rollers 38, 40 activate the heat-sensitive adhesive and apply pressure to the stock materials 20, 22 to adhere the stock materials 20, 22 to opposing sides of the master and/or to one another.

When the entire length of the master has been covered with stock material, the final product passes through the discharge opening 50. When the master has cleared the discharge opening 50, the operator stops rotation of the nip rollers 38, 40 via the control pad 208 and uses a cutting assembly 210 to sever the finished product from the continuous strip of stock materials 20, 22. As shown in Fig. 12, the cutting assembly 210 includes a cutting guide 212 with a cutting blade 214 secured thereto. The cutting guide 212 is slidably mounted to a track portion 216 provided on the frame 24 for sliding movement with respect to the frame 24. The user simply slides the cutting guide 212 from one end of the track portion 216 to the other end of the track portion 216 which moves the cutting blade 214 across the final product.

The final product may be supported at the discharge opening 50 by a substrate supporting surface configured to receive and support the processed master stock materials discharged from the processing assembly 26 in a substantially flat condition.

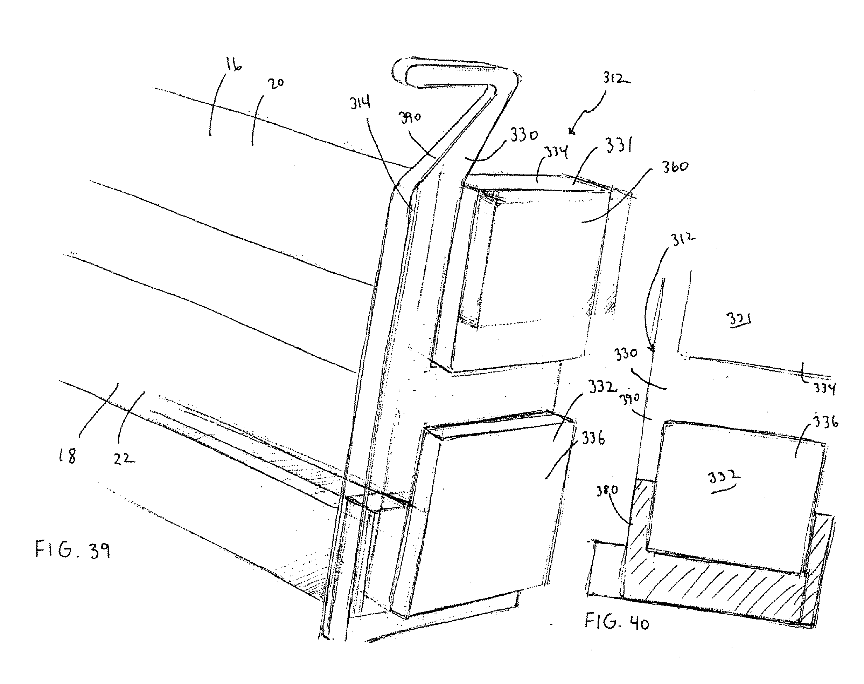

Figs. 39-42 illustrate another embodiment of a cartridge 312 that is structured to be removably mounted to the cartridge support assembly 28. The cartridge seat 380 (as shown in Figs. 40, 47-50) of the cartridge support assembly 28 has been modified to accommodate the cartridge 312, as will be further discussed.

As shown in Figs. 39, the cartridge 312 includes a cartridge body 314 that is constructed and arranged to be removably mounted to the cartridge support assembly 28. The feed rolls 16, 18, each carrying a supply of the stock materials 20, 22, are rotatably mounted to the cartridge body 314 to enable the stock materials 20, 22 to be unwound from their respective feed rolls 16, 18 ,and placed between the nip rollers 38, 40.

The cartridge body 314 includes a fixture 330, an upper portion 331, and a lower portion 332. The upper and lower portions 331, 332 are removably mounted to the fixture 330, which is removably mounted to the cartridge support assembly 28. When the cartridge support assembly 28 is moved from the cartridge receiving position to the cartridge operating position thereof, the cartridge support assembly 28 removes the upper and lower portions 331, 332 from the fixture 330 and individually positions each of the portions 331, 332 in individual operative positions wherein the stock materials 20, 22 on each of the feed rolls 16, 18 can be fed into the master processing assembly 26 for performance of the master processing operation, thereby establishing the operative position of the cartridge 312.

In the illustrated embodiment, the feed roll 16 is mounted to the upper portion 331 and the feed roll 18 is mounted to the lower portion 332. The upper portion 331 includes a pair of first feed roll supports 334 and the lower portion 332 includes a pair of second feed roll supports 336. In the illustrated embodiment, the first feed roll supports 334 are positioned on opposite sides of the feed roll 16 to rotatably receive the feed roll 16 therebetween. The second feed roll supports 336 are positioned on opposite sides of the other feed roll 18 to rotatably receive the feed roll 18 therebetween.

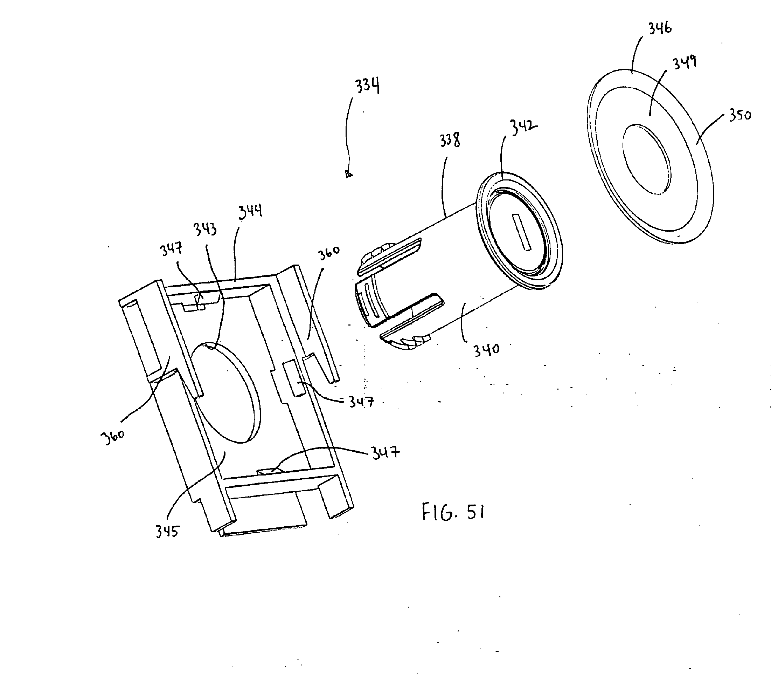

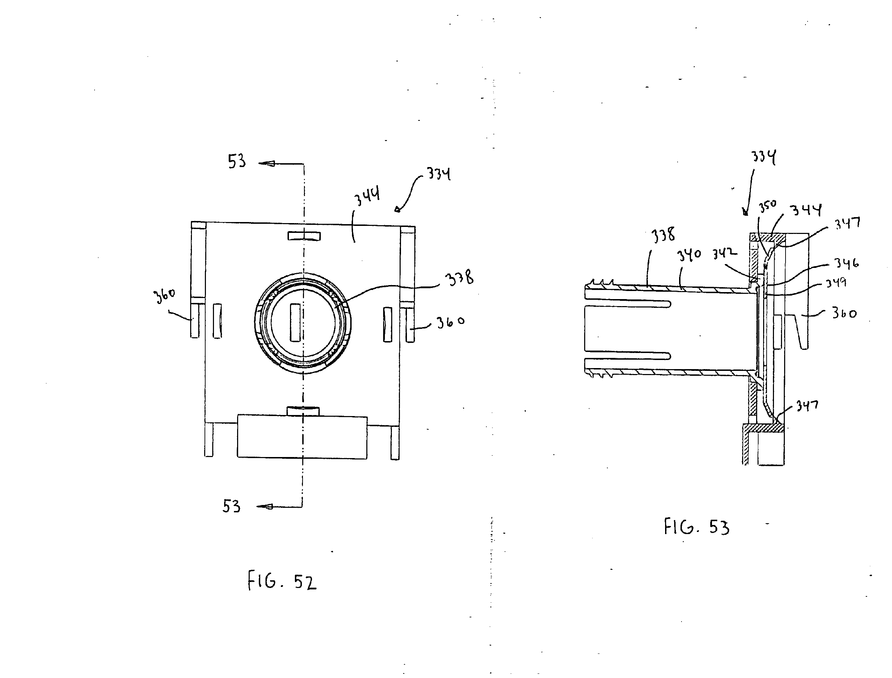

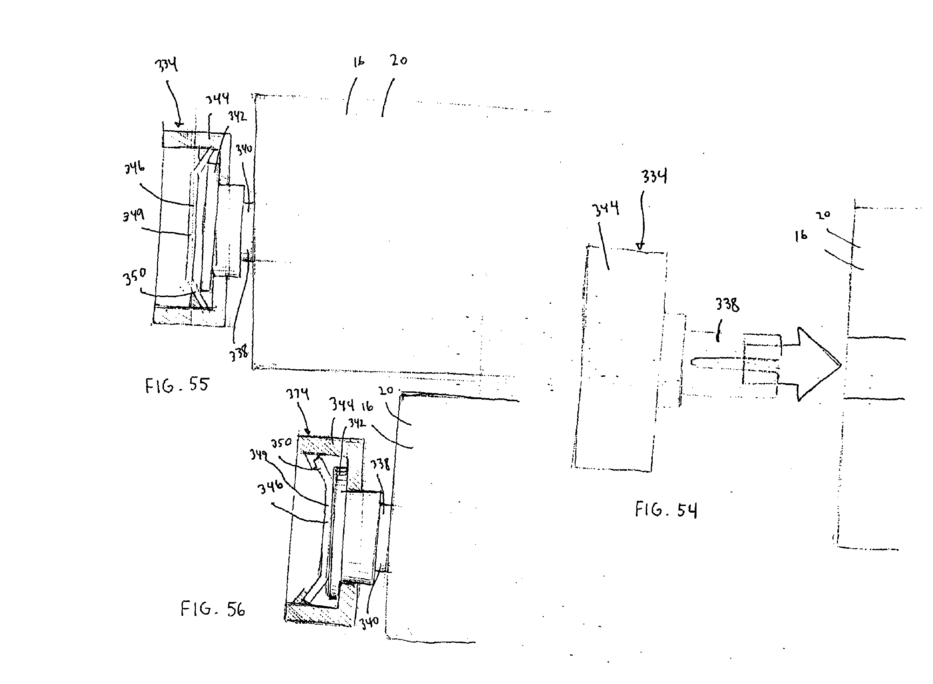

Figs. 51-56 illustrate a feed roll support 334 of the upper portion 331. As shown in Fig. 51, each feed roll support 334 includes a hub 338, a support structure 344, and a tension washer 346. The support structure 344 includes a protrusion 360 in the form of a pair of tabs structured to engage a cartridge holder 86, 88 of the cartridge support assembly 28, as will be further discussed. The hub 338 has a tubular portion 340 with an annular protrusion 342. The tubular portion 340 of the hub 338 is inserted through an opening 343 in the side wall 345 of the support structure 344 until the annular protrusion 342 is positioned adjacent the side wall 345. The tension washer 346 is secured to the support structure 344 by tabs 347 that engage an outer portion 350 of the tension washer 346, as shown in Fig. 53. As a result, the hub 338 is rotatably mounted between the support structure 344 and the tension washer 346. An end of a core of the feed roll 16 is positioned over the tubular portion 340 to secure the end of the feed roll 16 to the hub 338, as shown in Fig. 54.

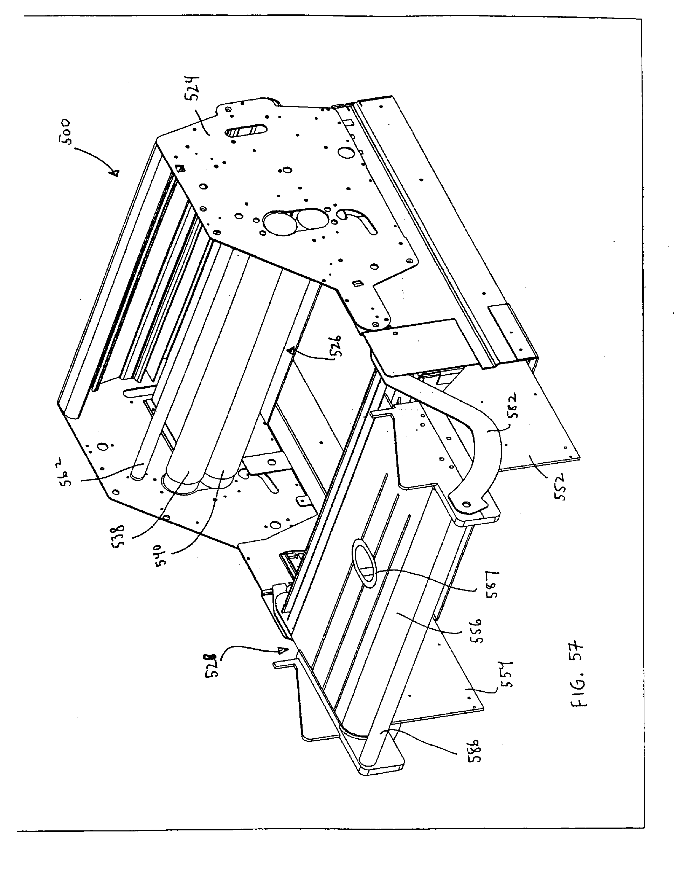

The tension washer 346 is structured to apply a braking force to the hub 338. Specifically, the tension washer 346 includes a central portion 349 and an outer portion 350 angled with respect to the central portion 349. As shown in Fig. 55, the tension washer 346 is initially engaged with the support structure 344 such that the central portion 349 thereof is spaced from the hub 338, thereby establishing a non-biased position of the tension washer 346. Then, the central portion 349 is moved towards the hub 338 which allows the outer portion 350 to bias the central portion 349 into engagement with the hub 338, as shown in Fig. 56, thereby establishing a biased position of the tension washer 346. The friction between the central portion 349 of tension washer 346 and the annular protrusion 342 of the hub 338 provides a braking force to resist rotation of the feed roll 16. This resistance helps maintain tension in the stock material 20 as it is unwound from the feed roll 16 to keep the stock material 20 taut. The structure and thickness of the tension washer 346 as well as the structure and thickness of the hub 338 can be modified to modify the amount of braking force applied to the feed roll 16.

The feed roll supports 336 of the lower portion 332 are substantially similar to the feed roll supports 334 of the upper portion 331, except the feed roll supports 336 do not include a protrusion 360 on the support structure 344.

The feed roll support 334, 336 may not include a tension washer to provide a braking force to respective feed rolls 16, 18. Specifically, the feed roll support 334, 336 may include a flat washer, for example, structured to maintain the hub to the base, but not provide a braking force to the hub. In fact, the presence of any braking force is entirely optional.

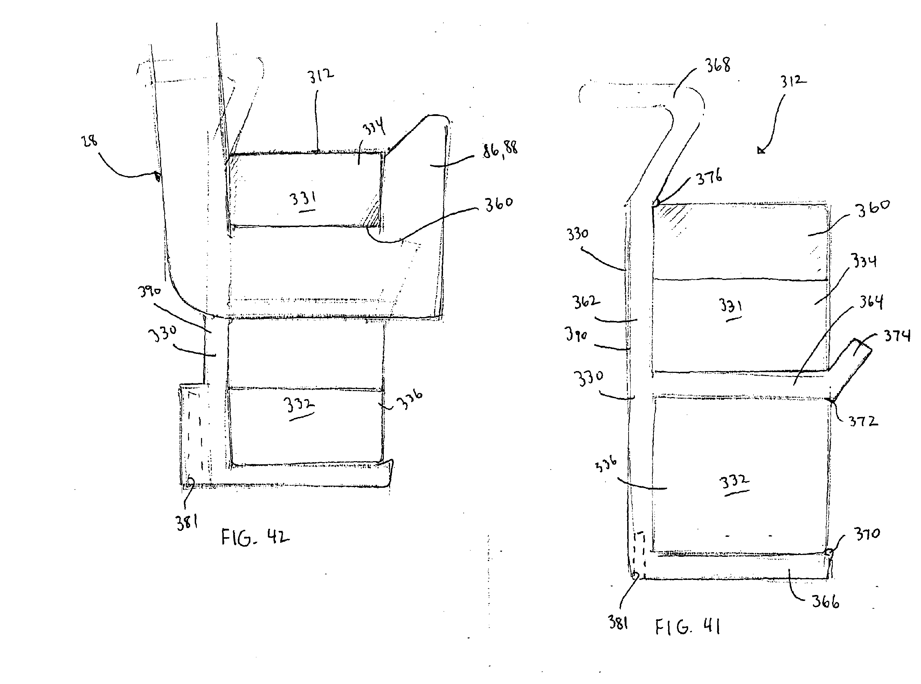

In the illustrated embodiment, the fixture 330 includes a pair of holder members 390 structured to hold the upper and lower portions 331, 332. As best shown in Fig. 41, each holder member 390 includes a body portion 362, upper and lower arm portions 364, 366, and a handle portion 368. The lower arm portion 366 includes an upwardly extending protrusion 370. The upper arm portion 364 includes a downwardly extending protrusion 372 and an upwardly extending protrusion 374. Further, the body portion 362 includes an outwardly extending protrusion 376.

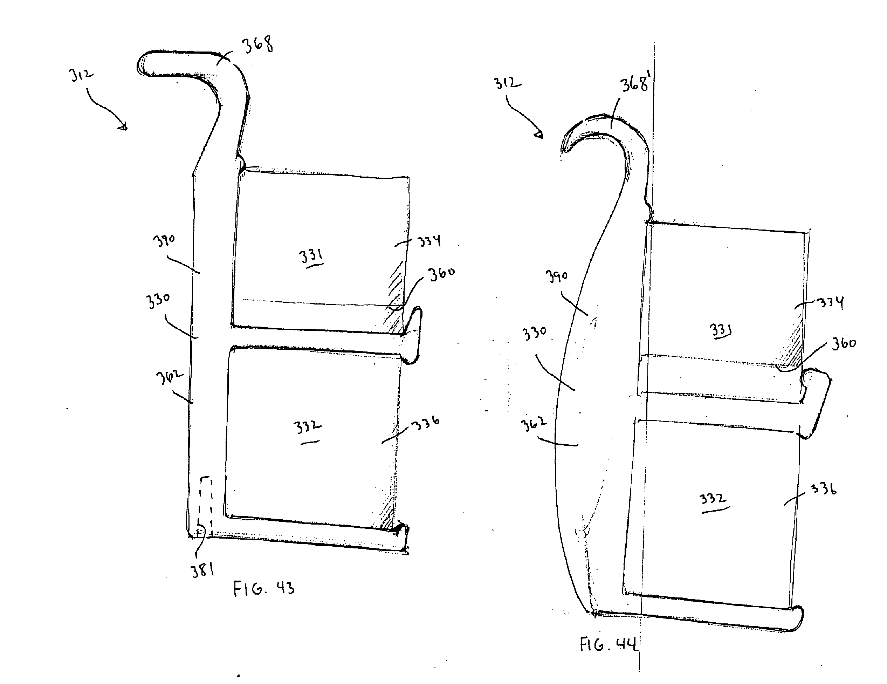

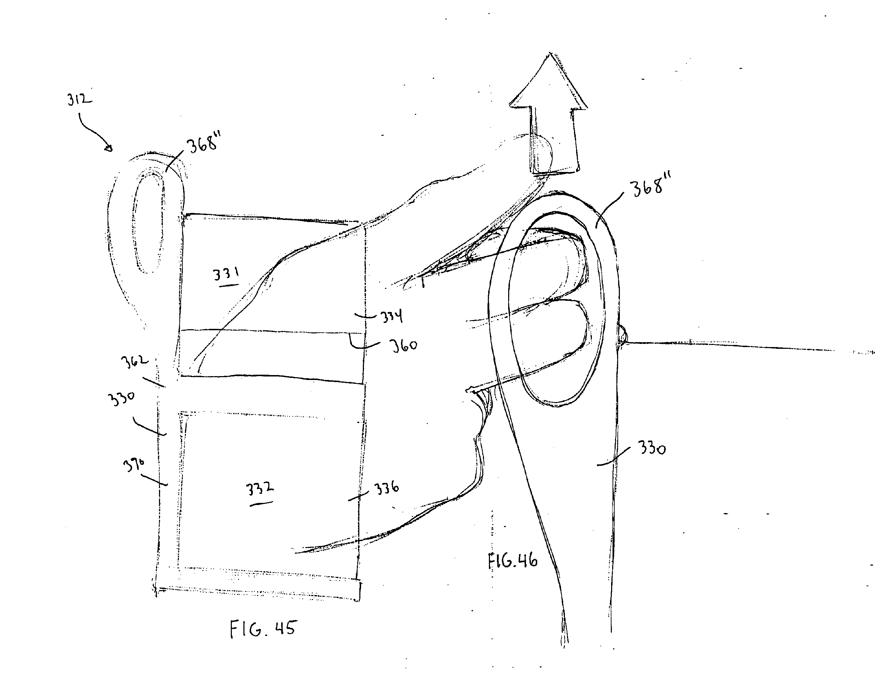

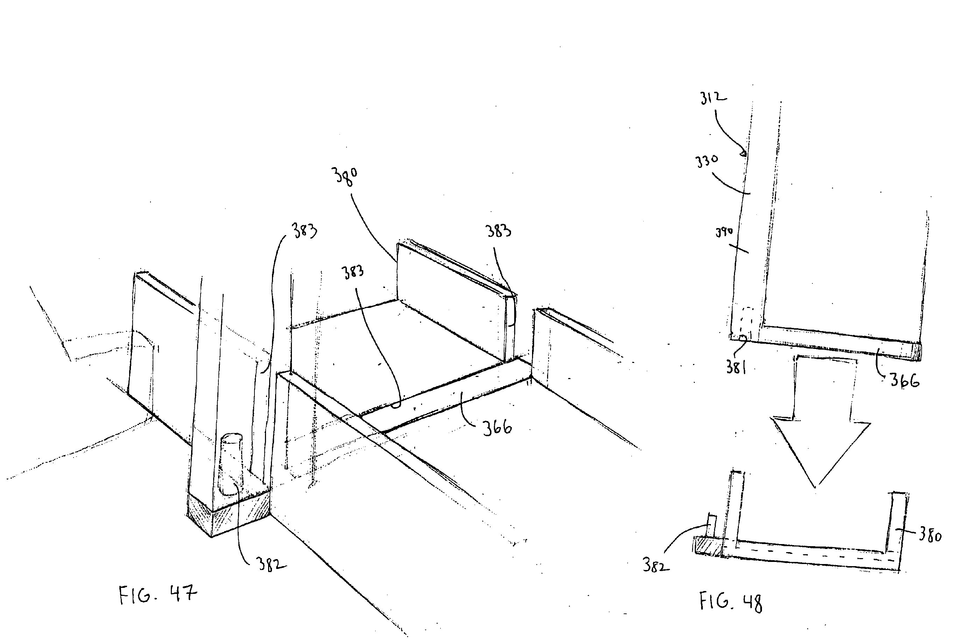

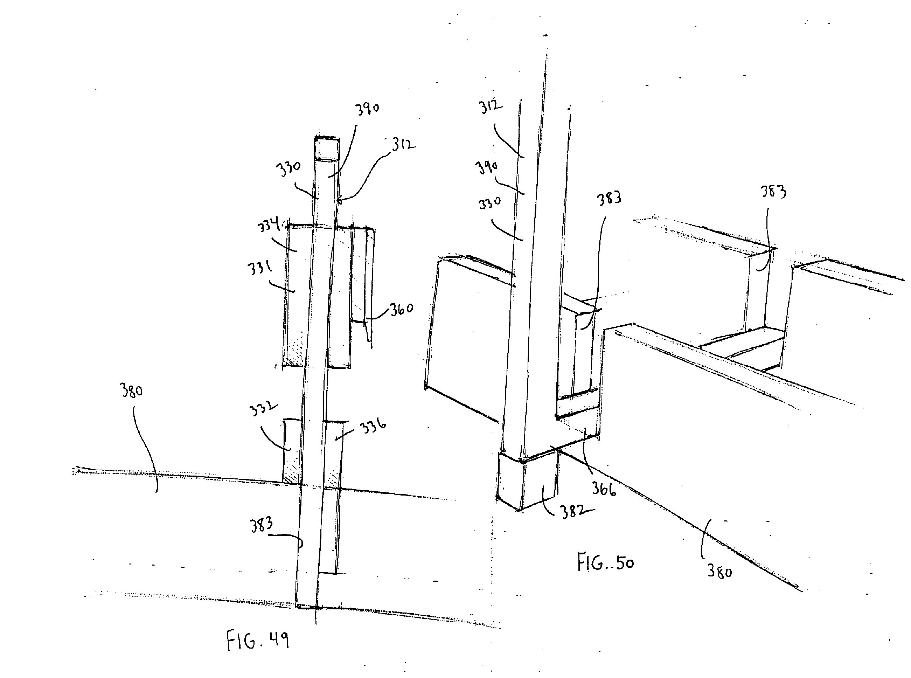

The lower portion 332 is secured between the arm portions 364, 366 of respective holder members 390 by the protrusions 370, 372. Specifically, the lower portion 332 engages the protrusions 370, 372 with a snap action to secure the lower portion 332 between the holder members 390. The upper portion 331 is positioned on the arm portion 364 of respective holder members 390 and is secured thereon by the protrusions 374 and 376. Specifically, the upper portion 331 engages the protrusion 376 with a snap action to secure the lower portion 331 to the holder members 390. As a result, the upper and lower portions 331, 332 are removably coupled to one another by the holder members 390 which facilitates the shipping of the feed rolls 16, 18 as well as the removal and replacement of feed rolls 16, 18 to the apparatus 10. The handle portion 368 of the fixture 330 can have any suitable contour to facilitate handling by the user. For example, Figs. 41 and 43 illustrate fixtures having generally L-shape handle portion 368, Fig. 44 illustrates a fixture having generally arcuate-shape handle portion 368', and Figs. 45 and 46 illustrate a fixture having closed loop handle portion 368''. Figs. 41, 43, and 44 also illustrate different configurations of the protrusions for securing the upper and lower portions 331, 332 to the fixture 330. The protrusions can have any suitable shape for securing the upper and lower portions 331, 332 to the fixture 330.

As shown in Figs. 39 and 49, the upper portion 331 extends further outwardly from the fixture 330 than the lower portion 332. Specifically, each of the feed roll supports 334 of the upper portion 331 include the protrusion 360 structured to engage a respective cartridge holder 86, 88 of the cartridge support assembly 28 for purposes of moving the upper portion 331 into its individual operative position. The protrusion 360 may have any suitable structure. Further, the body portion 362 of the fixture 330 includes a recess 381 (Fig. 41) that is structured to engage a protrusion 382 (Figs. 47, 48, and 50) provided on the frame 24 of the apparatus 10 for purposes of separating the fixture 330 from the upper and lower portions 331, 332 during a master processing operation, as will be further discussed.

The cartridge support assembly 28 is modified to accommodate the cartridge 312. Specifically, the cartridge seat 380 includes a pair of recesses 383 (only one recess 383 being visible in Figs. 47 and 50) that are structured to accommodate the lower arm portion 366 of respective holder members 390 of the cartridge 312. The recesses 383 extend through both sidewalls and the lower wall of the cartridge seat 380. Further, a protrusion 382 is provided on a bottom wall of the frame 24. The protrusion 382 is positioned such that when the cartridge support assembly 28 is in the cartridge receiving position, the protrusion 382 is positioned adjacent one of the recesses 383 provided in the cartridge seat 380.

Operation of the master processing apparatus 10 for use with the cartridge 312 will now be described in greater detail. In the cartridge receiving position as shown in Fig. 48, the cartridge support assembly 28 is moved to a position extending outwardly from the frame to allow the cartridge 312 to be mounted by dropping the cartridge 312 vertically downwardly into the cartridge support assembly 28.

The cartridge 312 is mounted with the upper and lower portions 331, 332 removably coupled with the fixture 330 to the cartridge support assembly 28 in its cartridge receiving position. When the cartridge 312 is loaded to the cartridge support assembly 28, the lower arm portion 366 of the fixture 330 extend through the recesses 383 in the cartridge seat 380 such that the lower portion 332 is positioned between the side walls of the cartridge seat 380, as shown in Figs. 40, 47, 49, and 50. Further, the protrusion 382 on the frame 24 extends through the recess 381 provided in the fixture 330. Moreover, the protrusions 360 of the upper portion 331 engage respective cartridge holders 86, 88, as shown in Fig. 42.

The cartridge support assembly 28 is constructed such that, as the cartridge support assembly 28 is moved from the cartridge receiving position to the cartridge operating position thereof, the cartridge support assembly 28 separates the upper and lower portions 331, 332 from the fixture 330 and individually positions each of the portions 331, 332 in individual operative positions wherein the stock materials 20, 22 on each of the feed rolls 16, 18 can be fed into the master processing assembly 26 for performance of the master processing operation, thereby establishing the operative position of the cartridge 312. Specifically, as the cartridge support assembly 28 is moved to the cartridge operating position, the cartridge holders 86, 88 separate the upper portion 331 from the fixture 330 and lifts the upper portion 331 up and over the upper nip roller 38. The cartridge seat 380 separates the lower portion 332 from the fixture 330 and moves the lower portion 332 inwardly therewith below the lower nip roller 40. Because the fixture 330 is engaged with the protrusion 382, the fixture 330 maintains its position as the cartridge seat 380 moves inwardly. As the cartridge support assembly 28 is moved to the cartridge operating position, the protrusions on the fixture 330 are resiliently deflected outwardly by respective portions 331, 332 until the portions 331, 332 disengage from the fixture 330.

When the feed rolls 16, 18 are used up, the user can move the cartridge support assembly 28 back into the cartridge receiving position, which moves the upper and lower portions 331, 332 back into engagement with the fixture 330. The user can then remove the fixture 330 with the used up feed rolls 16, 18 from the cartridge support assembly 28 and insert a new cartridge 312 therein.

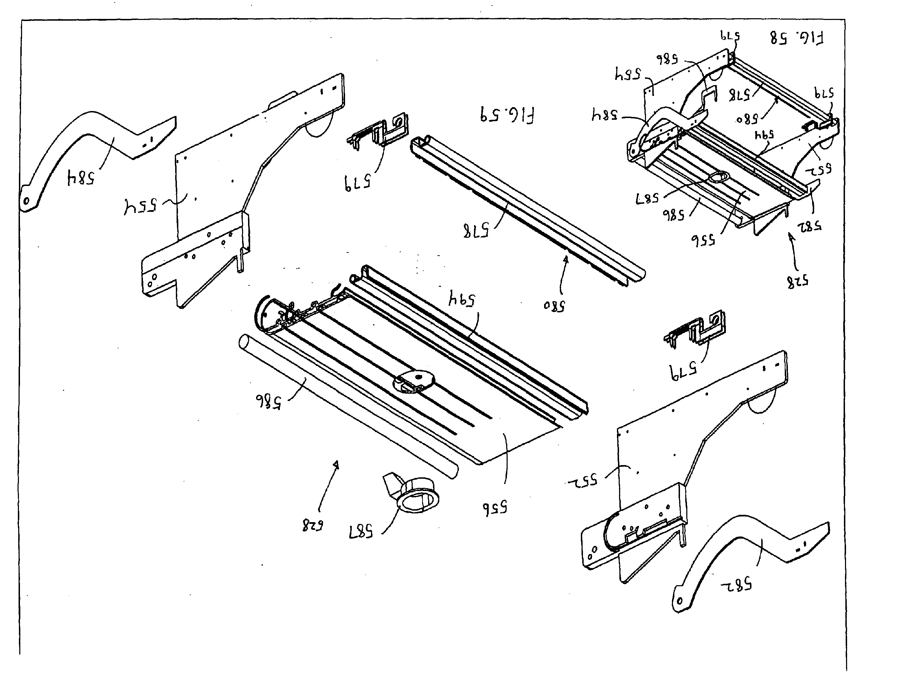

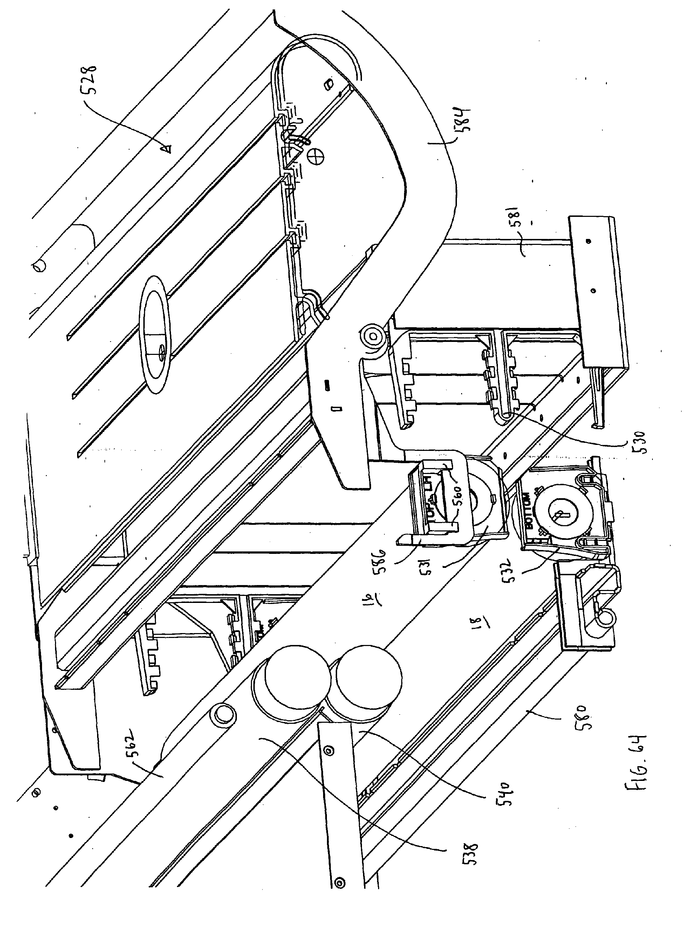

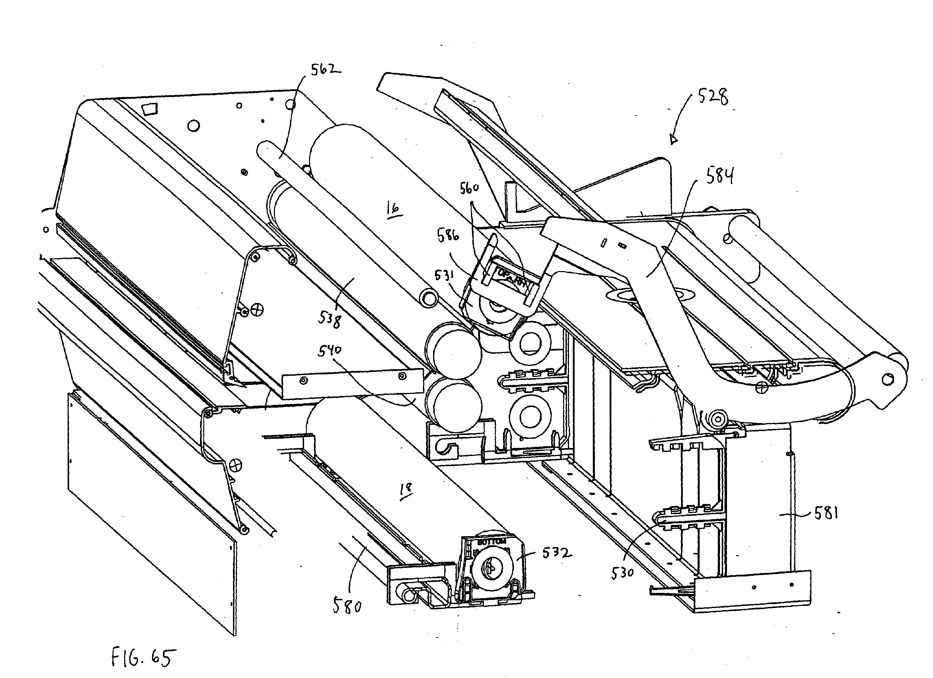

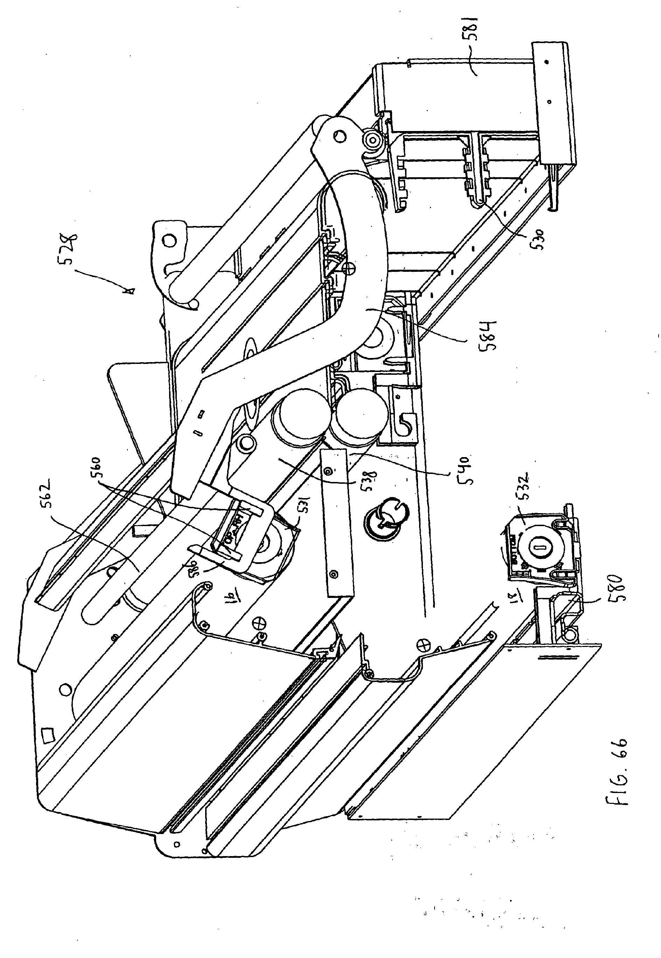

Fig. 57 illustrates another embodiment of a master processing apparatus 500. Similar to the apparatus 10, the apparatus 500 includes a frame 524, a master processing assembly 526, and a cartridge support assembly 528. The frame 524 is substantially similar to the frame 24. The frame 524 includes a fixture retainer 581 (see Figs. 63-66) that separates the fixture 530 of the cartridge 512 from the upper and lower portions 531, 532, as will be further discussed below.

The master processing assembly 526 is substantially similar to master processing assembly 26 and includes nip rollers 538, 540. Figs. 57 and 63-66 also illustrates guide bar 562 mounted to the frame 524 in spaced relation from nip roller 538.

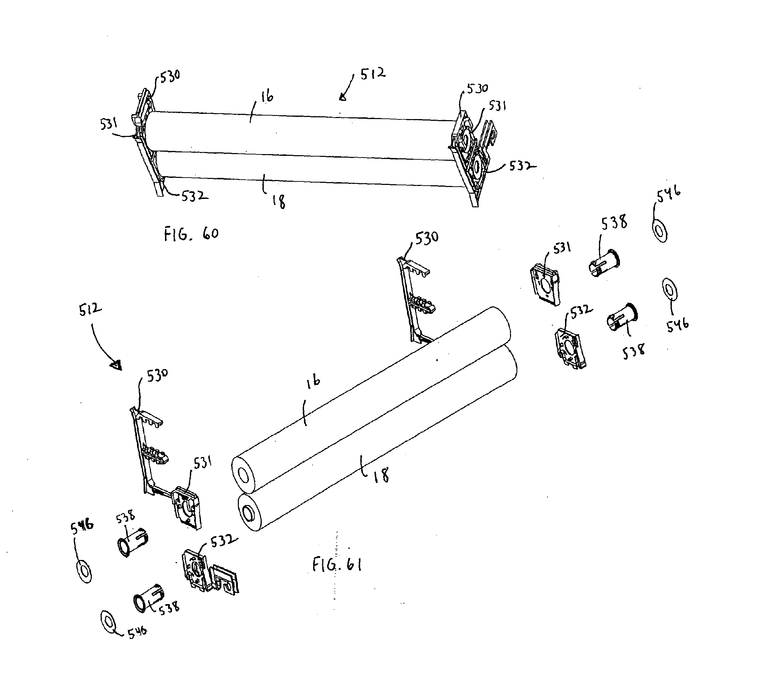

Figs. 57-59 illustrate the cartridge support assembly 528 that is slidably mounted to the frame 524 for movement between cartridge receiving and cartridge operating positions. The cartridge support assembly 528 includes side walls 552, 554 that support feed tray 556 therebetween. A cartridge seat 580 is mounted between the side walls 552, 554. The cartridge seat 580 includes support bar 578 and end members 579. The cartridge support assembly 528 also includes cam elements 582, 584. The cam elements 582, 584 support a support bar 594. Cartridge holders 586 (only one cartridge holder being illustrated) are rigidly mounted to respective cam elements 582, 584 or adjustably mounted to the support bar 594. Further, a bar handle 586 is mounted between the side walls 552, 554 and a lever member 587 is mounted to the feed tray 556. The bar handle 586 and lever member 587 may be used by user to assist the user in moving the cartridge support assembly 528 between cartridge receiving and cartridge operating positions.

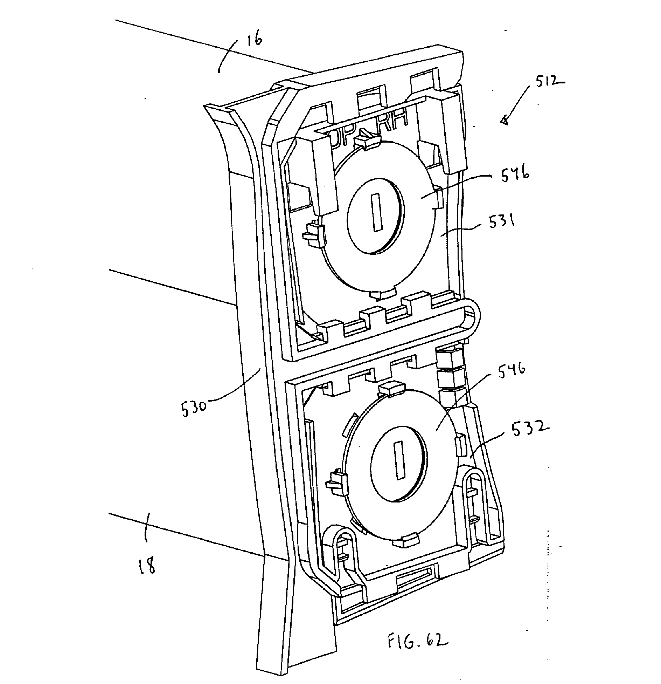

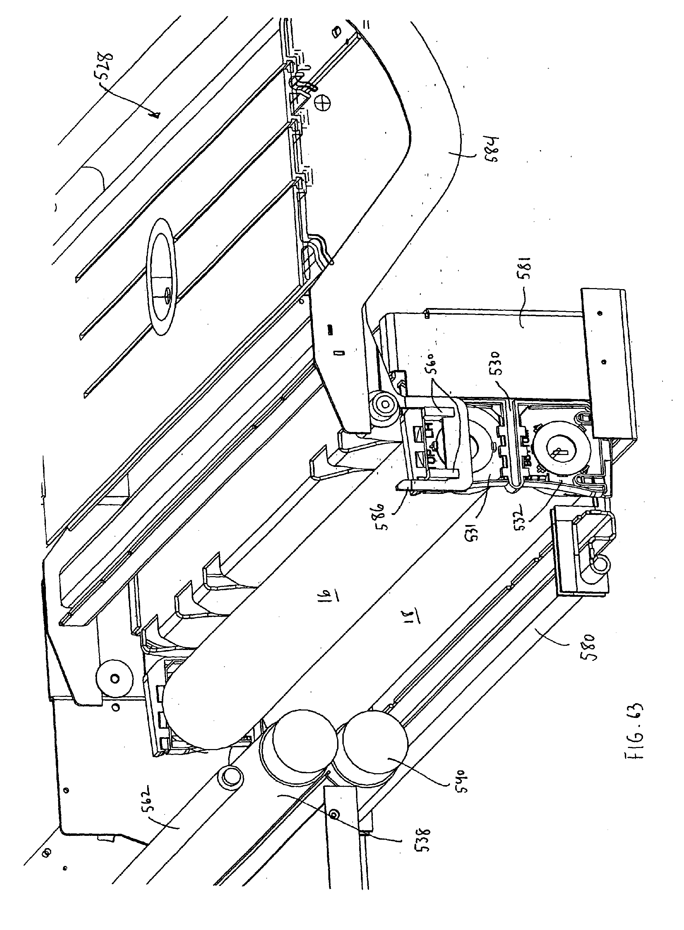

Figs. 60-62 illustrate another embodiment of a cartridge 512 that is structured to be removably mounted to the cartridge support assembly 528. The cartridge 512 includes fixtures 530, upper portions 531, and lower portions 532. The upper and lower portions 531, 532 are removably mounted to the fixtures 530. As illustrated, feed roll 16 is mounted between upper portions 531 and feed roll 18 is mounted between lower portions 532. The feed rolls 16, 18 are mounted to the upper and lower portions 531, 532 by a hub 538 and tension washer 546 similar to cartridge 312.

Operation of the master processing apparatus 500 for use with the cartridge 512 will now be described in greater detail. In the cartridge receiving position as shown in Fig. 63, the cartridge support assembly 528 is moved to a position extending outwardly from the frame 524 to allow the cartridge 512 to be mounted by dropping the cartridge 512 vertically downwardly into the cartridge support assembly 528.

The cartridge 512 is mounted with the upper and lower portions 531, 532 removably coupled with the fixtures 530 to the cartridge support assembly 528 in its cartridge receiving position. When the cartridge 512 is loaded to the cartridge support assembly 528, the fixtures 530 engage the fixture retainer 581 on the frame 524. Also, the lower portions 532 engage the end members 579 of the cartridge seat 580. Moreover, protrusions 560 of the upper portions 531 engage respective cartridge holders 586.

As shown in Figs. 64-66, the cartridge support assembly 528 is constructed such that, as the cartridge support assembly 528 is moved from the cartridge receiving position to the cartridge operating position thereof, the cartridge support assembly 528 separates the upper and lower portions 531, 532 from the fixtures 530 and individually positions each of the portions 531, 532 in individual operative positions wherein the stock materials on each of the feed rolls 16, 18 can be fed into the master processing assembly 526 for performance of the master processing operation, thereby establishing the operative position of the cartridge 512. Specifically, as the cartridge support assembly 528 is moved to the cartridge operating position, the cartridge holders 586 separate the upper portions 531 from the fixtures 530 and lifts the upper portion 531 up and over the upper nip roller 538. The cartridge seat 580 separates the lower portions 532 from the fixtures 530 and moves the lower portion 532 inwardly therewith below the lower nip roller 540. Because the fixture 530 is engaged with the fixture retainer 581, the fixture 530 maintains its position as the cartridge seat 580 moves inwardly. As the cartridge support assembly 528 is moved to the cartridge operating position, the fixtures 530 resiliently deflect to allow the portions 531, 532 to disengage from the fixtures 530.

When the feed rolls 16, 18 are used up, the user can move the cartridge support assembly 528 back into the cartridge receiving position, which moves the upper and lower portions 531, 532 back into engagement with the fixtures 530. The user can then remove the fixtures 530 with the used up feed rolls 16, 18 from the cartridge support assembly 528 and insert a new cartridge 512 therein.

Although the illustrated embodiment describes the retrofitting or conversion of a GBC Ultima 65 apparatus, it can be appreciated that any laminator or other master processing apparatus that only accepts individual wound rolls of laminating film may be converted to a second, cartridge receiving configuration in a similar manner as described above. Moreover, various aspects of the invention can be applied to any type of laminator, including those not being retrofit.

It can thus be appreciated that the objectives of the present invention have been fully and effectively accomplished. The foregoing specific embodiments have been provided to illustrate the structural and functional principles of the present invention and are not intended to be limiting. To the contrary, the present invention is intended to encompass all modifications, alterations, and substitutions within the scope of the appended claims.

## Claims

1. A method of converting a master processing apparatus (10) for performing a master processing operation wherein adhesive bonding is affected between a pair of stock materials and a master received therebetween from (a) a first configuration configured for use with a pair of individual removable feed rolls having the stock materials wound thereon with at least one of the stock materials having adhesive provided thereon to (b) a second configuration configured for use with a cartridge (12) including a cartridge body (14) and a pair of feed rolls (16, 18) rotatably mounted on the cartridge body (14) and having the stock materials (20, 22) wound thereon with at least one of the stock materials having adhesive provided thereon,
the apparatus (10) in at least its first configuration comprising (a) a frame (24) including structure for individually rotatably mounting the pair of individual feed rolls to enable the stock materials to be unwound therefrom, and (b) a master processing assembly (26) constructed and arranged such that a master can be inserted into the master processing assembly together with the stock materials unwound from their respective individual feed rolls and disposed on opposing sides of the master, the master processing assembly (26) being constructed and arranged to perform a master processing operation wherein the master processing assembly (26) causes adhesive bonding between the master and the stock materials being fed into a feed side thereof,
the method comprising:
mounting a cartridge support assembly (28) to the frame (24), the cartridge support assembly (28) being constructed to support the cartridge (12) in an operative position wherein the stock materials on the feed rolls of the cartridge (12) can be fed into the master processing assembly (26) for performance of the master processing operation.

2. A method according to claim 1, further comprising mounting the cartridge (12) to said cartridge support assembly (28) in the operative position thereof.

3. A method according to claim 1 or 2, wherein said cartridge body (14) includes two portions (130, 132) removably coupled together, one of the feed rolls (16, 18) being mounted to one of the two portions and the other of the feed rolls (16, 18) being mounted to the other of the two portions, and wherein the cartridge support assembly (28) is moveable from a cartridge receiving position to a cartridge operating position, the cartridge support assembly (28) being constructed such that, as the cartridge support assembly (28) is moved from the cartridge receiving position to the cartridge operating position thereof, the cartridge support assembly (28) separates the two portions (130, 132) of the cartridge body from one another and individually positions each of the two portions (130, 132) of the cartridge body (14) in individual operative positions wherein the stock materials on each of the feed rolls (16, 18) can be fed into the master processing assembly (26) for performance of the master processing operation, thereby establishing the operative position of the cartridge (12);
the mounting the cartridge to said cartridge support assembly in the operative position thereof, comprising:
mounting the cartridge (12) with the two portions (130, 132) removably coupled together to the cartridge support assembly (28) in its cartridge receiving position; and
moving the cartridge support assembly (28) to its cartridge operating position to cause the cartridge support assembly to separate the two portions (130, 132) of the cartridge body (14) from one another and individually position each of the two portions of the cartridge body (14) in individual operative positions
wherein the stock materials (20, 22) on each of the feed rolls (16, 18) can be fed into the master processing assembly (26) for performance of the master processing operation, thereby establishing the operative position of the cartridge (12).

4. A method according to claim 3, wherein the two portions (130, 132) are removably coupled together by a latch (160) that is movable between a locking position and a releasing position, and wherein the cartridge support assembly (28) includes a cartridge seat (80) and a pair of cam elements (82, 84) providing a pair of cartridge holders,
the mounting the cartridge (12) to said cartridge support assembly (28) in the operative position thereof comprising:
mounting the cartridge (12) with the two portions removably coupled together by the latch in its locking position to the cartridge support assembly (28) in its cartridge receiving position such that one of the two portions is positioned within the cartridge seat (80) and the other of the two portions is engaged with the cartridge holders (86, 88), the cartridge holders configured and positioned to move the latch (160) from the locking position to the releasing position; and
moving the cartridge support assembly (28) to its cartridge operating position to cause the cam elements (82, 84) to separate the portion engaged with the cartridge holders (86, 88) thereof from the portion positioned with the cartridge seat from one another, the two portions moving along with the cam elements and the cartridge seat (80), respectively, which individually positions each of the two portions (130, 132) of the cartridge body (14) in individual operative positions wherein the stock materials on each of the feed rolls (16, 18) can be fed into the master processing assembly (26) for performance of the master processing operation, thereby establishing the operative position of the cartridge (12).

5. A method according to claim 3, wherein the two portions (130, 132) are removably coupled together by a fixture (330), and wherein the cartridge support assembly (28) includes a cartridge seat (380) and a pair of cam elements (82, 84) providing a pair of cartridge holders (86,88),
the mounting the cartridge (12) to said cartridge support assembly (28) in the operative position thereof, comprising:
mounting the cartridge (12) with the two portions (130, 132) removably coupled together by the fixture to the cartridge support assembly (28) in its cartridge receiving position such that one of the two portions is positioned within the cartridge seat (380) and the other of the two portions is engaged with the cartridge holders (86,88); and
moving the cartridge support assembly (28) to its cartridge operating position to cause the cam elements (82, 84) to separate the portion engaged with the cartridge holders thereof from the fixture and to cause the cartridge seat (380) to separate the portion therein from the fixture, the two portions moving along with the cam elements and the cartridge seat (380), respectively, which individually positions each of the two portions of the cartridge body (14) in individual operative positions wherein the stock materials on each of the feed rolls can be fed into the master processing assembly (26) for performance of the master processing operation, thereby establishing the operative position of the cartridge.

6. A method of mounting a cartridge (12) to a master processing apparatus (10), the cartridge including a cartridge body and a pair of feed rolls (16, 18) rotatably mounted thereon each carrying a supply of stock material (20, 22) to be unwound, at least one of the stock materials having adhesive provided thereon,
the cartridge body (14) including two portions (130, 132) removably coupled together, one of the feed rolls being mounted to one of the two portions and the other of the feed rolls being mounted to the other of the two portions,
the apparatus comprising (a) a frame, (b) a master processing assembly (26) constructed and arranged such that a master can be inserted into the master processing assembly (26) together with the stock materials unwound from their respective feed rolls and disposed on opposing sides of the master, the master processing assembly being constructed and arranged to perform a master processing operation wherein the master processing assembly (26) causes adhesive bonding between the master and the stock materials being fed into a feed side thereof, and (c) a cartridge support assembly (28) constructed to support the cartridge in an operative position wherein the stock materials on the feed rolls of the cartridge (12) can be fed into the master processing assembly for performance of the master processing operation,
the cartridge support assembly (28) being moveable from a cartridge receiving position to a cartridge operating position, the cartridge support assembly (28) being constructed such that, as the cartridge support assembly is moved from the cartridge receiving position to the cartridge operating position thereof, the cartridge support assembly separates the two portions of the cartridge body (14) from one another and individually positions each of the two portions (130, 132) of the cartridge body (14) in individual operative positions wherein the stock materials on each of the feed rolls can be fed into the master processing assembly (26) for performance of the master processing operation, thereby establishing the operative position of the cartridge;
the method comprising:
mounting the cartridge (12) with the two portions removably coupled together to the cartridge support assembly (28) in its cartridge receiving position; and
moving the cartridge support assembly (28) to its cartridge operating position to cause the cartridge support assembly to separate the two portions of the cartridge body from one another and individually position each of the two portions of the cartridge body in individual operative positions wherein the stock materials on each of the feed rolls can be fed into the master processing assembly for performance of the master processing operation, thereby establishing the operative position of the cartridge (12).

7. A method according to claim 6, wherein the two portions (130, 132) are removably coupled together by a latch (160) that is movable between a locking position and a releasing position, and wherein the cartridge support assembly (28) includes a cartridge seat and a pair of cam elements providing a pair of cartridge holders,
the mounting the cartridge (12) to said cartridge support assembly in the operative position thereof comprising:
mounting the cartridge (12) with the two portions removably coupled together by the latch (160) in its locking position to the cartridge support assembly (28) in its cartridge receiving position such that one of the two portions is positioned within the cartridge seat (80) and the other of the two portions is engaged with the cartridge holders (86,88), the cartridge holders configured and positioned to move the latch from the locking position to the releasing position; and
moving the cartridge support assembly (28) to its cartridge operating position to cause the cam elements (82, 84) to separate the portion engaged with the cartridge holders thereof from the portion positioned with the cartridge seat from one another, the two portions moving along with the cam elements (82, 84) and the cartridge seat, respectively, which individually positions each of the two portions of the cartridge body in individual operative positions
wherein the stock materials on each of the feed rolls (16, 18) can be fed into the master processing assembly for performance of the master processing operation, thereby establishing the operative position of the cartridge.

8. A method according to claim 6, wherein the two portions are removably coupled together by a fixture, and wherein the cartridge support assembly includes a cartridge seat (80) and a pair of cam elements (82, 84) providing a pair of cartridge holders,
the mounting the cartridge to said cartridge support assembly in the operative position thereof comprising:
mounting the cartridge (12) with the two portions removably coupled together by the fixture (330) to the cartridge support assembly in its cartridge receiving position such that one of the two portions is positioned within the cartridge seat and the other of the two portions is engaged with the cartridge holders; and
moving the cartridge support assembly (28) to its cartridge operating position to cause the cam elements to separate the portion engaged with the cartridge holders thereof from the fixture and to cause the cartridge seat to separate the portion therein from the fixture, the two portions moving along with the cam elements and the cartridge seat (380), respectively, which individually positions each of the two portions of the cartridge body in individual operative positions wherein the stock materials on each of the feed rolls can be fed into the master processing assembly for performance of the master processing operation, thereby establishing the operative position of the cartridge (12).

9. A master processing apparatus (10) for use with a cartridge (12), the cartridge including a cartridge body and a pair of feed rolls rotatably mounted thereon each carrying a supply of stock material to be unwound, the cartridge body including two portions (130, 132) removably coupled together, one of the feed rolls being mounted to one of the two portions and the other of the feed rolls being mounted to the other of the two portions, the apparatus comprising:
a frame (24);
a master processing assembly (26) constructed and arranged such that a master can be inserted into the master processing assembly together with the stock materials unwound from their respective feed rolls and disposed on opposing sides of the master, the master processing assembly being constructed and arranged to perform a master processing operation wherein the master processing assembly causes adhesive bonding between the master and the stock materials being fed into a feed side thereof; and
a cartridge support assembly (28) constructed to support the cartridge in an operative position wherein the stock materials on the feed rolls of the cartridge can be fed into the master processing assembly for performance of the master processing operation;
the cartridge support assembly (28) being moveable from a cartridge receiving position to a cartridge operating position, the cartridge support assembly being constructed such that, as the cartridge support assembly is moved from the cartridge receiving position to the cartridge operating position thereof, the cartridge support assembly separates the two portions of the cartridge body from one another and individually positions each of the two portions of the cartridge body in individual operative positions wherein the stock materials on each of the feed rolls can be fed into the master processing assembly for performance of the master processing operation, thereby establishing the operative position of the cartridge.

10. A master processing apparatus according to claim 9, wherein the two portions of the cartridge are removably coupled together by a latch (160) that is movable between a locking position and a releasing position, and wherein the cartridge support assembly includes a cartridge seat and a pair of cam elements providing a pair of cartridge holders,
the cartridge support assembly (28) being constructed to enable the cartridge with the two portions removably coupled together by the latch (160) in its locking position to be mounted to the cartridge support assembly in its cartridge receiving position such that one of the two portions is positioned within the cartridge seat and the other of the two portions is engaged with the cartridge holders, the cartridge holders configured and positioned to move the latch from the locking position to the releasing position; and
the cartridge support assembly (28) being constructed to separate the portion engaged with the cartridge holders thereof from the portion positioned with the cartridge seat from one another as the cartridge support assembly is being moved to its cartridge operating position, the two portions moving along with the cam elements (82, 84) and the cartridge seat, respectively, which individually positions each of the two portions of the cartridge body in individual operative positions wherein the stock materials on each of the feed rolls can be fed into the master processing assembly for performance of the master processing operation, thereby establishing the operative position of the cartridge.

11. A master processing apparatus according to claim 9 or 10, wherein the cartridge holders (86, 88) are adjustably mounted with respect to the cam elements such that the cartridge holders can be moved to accommodate different cartridges that support different feed roll widths.

12. A master processing apparatus according to claim 9, wherein the two portions of the cartridge are removably coupled together by a fixture (330), and wherein the cartridge support assembly (28) includes a cartridge seat and a pair of cam elements providing a pair of cartridge holders (86, 88),
the cartridge support assembly (28) being constructed to enable the cartridge (12) with the two portions removably coupled together by the fixture to be mounted to the cartridge support assembly in its cartridge receiving position such that one of the two portions is positioned within the cartridge seat and the other of the two portions is engaged with the cartridge holders; and
the cartridge support assembly (28) being constructed to separate the portion engaged with the cartridge holders thereof from the fixture and to cause the cartridge seat to separate the portion therein from the fixture as the cartridge support assembly is being moved to its cartridge operating position, the two portions moving along with the cam elements and the cartridge seat, respectively, which individually positions each of the two portions of the cartridge body in individual operative positions wherein the stock materials (20, 22) on each of the feed rolls (16, 18) can be fed into the master processing assembly for performance of the master processing operation, thereby establishing the operative position of the cartridge.

13. A master processing apparatus according to any of claims 9 to 12, further comprising a fan (112) configured and positioned to blow air into the stock materials (20, 22) of the feed rolls when each of the two portions of the cartridge body are in their individual operative positions, the air from the fan forcing end portions of the stock materials into engagement with the master processing assembly (26).

14. A master processing apparatus according to claim 10, wherein the cam elements include cam surfaces that engage respective bearings (180) provided on the frame of the apparatus, the cam surfaces being configured to ride along respective bearings as the cartridge support assembly (28) is moved from the cartridge receiving position to the cartridge operating position to cause the cam elements to separate the two portions from one another.

15. A master processing apparatus according to claim 10, further comprising a cover (114) pivotally connected to the frame (24) for movement about an axis, the cover including a cam element mounted thereto that rotates along with the cover about the axis, wherein the cam element is structured to selectively engage a switch unit depending on the position of the cover, the switch unit configured to control operation of the master processing assembly.

16. A retrofitting kit for converting a master processing apparatus for performing a master processing operation wherein adhesive bonding is affected between a pair of stock materials and a master received therebetween from (a) a first configuration configured for use with a pair of individual removable feed rolls having the stock materials wound thereon with at least one of the stock materials having adhesive provided thereon to (b) a second configuration configured for use with a cartridge (12) including a cartridge body (14) and a pair of feed rolls (16, 18) rotatably mounted on the cartridge body and having the stock materials wound thereon with at least one of the stock materials (20, 22) having adhesive provided thereon,
the apparatus in at least its first configuration comprising (a) a frame including structure for individually rotatably mounting the pair of individual feed rolls to enable the stock materials to be unwound therefrom, and (b) a master processing assembly (26) constructed and arranged such that a master can be inserted into the master processing assembly together with the stock materials unwound from their respective individual feed rolls and disposed on opposing sides of the master, the master processing assembly (26) being constructed and arranged to perform a master processing operation wherein the master processing assembly causes adhesive bonding between the master and the stock materials being fed into a feed side thereof, the retrofitting kit comprising:
a cartridge support assembly (28) constructed to be mounted to the frame of the master processing apparatus and to support the cartridge (12) in an operative position wherein the stock materials (20, 22) on the feed rolls (16, 18) of the cartridge can be fed into the master processing assembly (26) for performance of the master processing operation.

17. A retrofitting kit according to claim 16, wherein the cartridge body (14) includes two portions (130, 132) removably coupled together, one of the feed rolls being mounted to one of the two portions and the other of the feed rolls being mounted to the other of the two portions,
the cartridge support assembly (28) being constructed to be movable from a cartridge receiving position to a cartridge operating position,
the cartridge support assembly (28) being constructed such that, as the cartridge support assembly is moved from the cartridge receiving position to the cartridge operating position thereof, the cartridge support assembly (28) separates the two portions of the cartridge body from one another and individually positions each of the two portions of the cartridge body in individual operative positions wherein the stock materials on each of the feed rolls can be fed into the master processing assembly for performance of the master processing operation, thereby establishing the operative position of the cartridge.

18. A retrofitting kit according to claim 16 or 17, wherein the cartridge support assembly includes cartridge holders that are adjustable to accommodate different cartridges that support different feed roll widths.

19. A retrofitting kit according to any of claims 16 to 18, further comprising a fan (112) configured and positioned to blow air into the stock materials of the feed rolls when each of the two portions of the cartridge body are in their individual operative positions, the air from the fan forcing end portions of the stock materials into engagement with the master processing assembly.

20. A retrofitting kit according to any of claims 16 to 19, wherein the cartridge support assembly includes cam elements having cam surfaces that engage respective bearings provided on the frame of the apparatus, the cam surfaces being configured to ride along respective bearings (180) as the cartridge support assembly is moved from the cartridge receiving position to the cartridge operating position to cause the cam elements to separate the two portions from one another.

21. A combination comprising:
a cartridge (12) including a cartridge body (14) and a pair of feed rolls (16, 18) rotatably mounted thereon each carrying a supply of stock material (20, 22) to be unwound, at least one of the stock materials having adhesive provided thereon, the cartridge body including two portions removably coupled together, one of the feed rolls being mounted to one of the two portions and the other of the feed rolls being mounted to the other of the two portions; and
a master processing apparatus comprising (a) a frame (24), and (b) a master processing assembly (26) constructed and arranged such that a master can be inserted into the master processing assembly together with the stock materials unwound from their respective feed rolls and disposed on opposing sides of the master, the master processing assembly being constructed and arranged to perform a master processing operation wherein the master processing assembly causes adhesive bonding between the master and the stock materials being fed into a feed side thereof, and (c) a cartridge support assembly (28) constructed to support the cartridge in an operative position wherein the stock materials on the feed rolls of the cartridge can be fed into the master processing assembly for performance of the master processing operation,
the cartridge support assembly (28) being moveable from a cartridge receiving position to a cartridge operating position, the cartridge support assembly being constructed such that, as the cartridge support assembly is moved from the cartridge receiving position to the cartridge operating position thereof, the cartridge support assembly separates the two portions of the cartridge body from one another and individually positions each of the two portions of the cartridge body in individual operative positions wherein the stock materials on each of the feed rolls can be fed into the master processing assembly for performance of the master processing operation, thereby establishing the operative position of the cartridge.

22. A combination according to claim 21, wherein the two portions are removably coupled together by a latch (160) that is movable between a locking position and a releasing position, and wherein the cartridge support assembly includes a cartridge seat and a pair of cam elements providing a pair of cartridge holders,
the cartridge (12) with the two portions removably coupled together by the latch in its locking position being mounted to the cartridge support assembly in its cartridge receiving position such that one of the two portions is positioned within the cartridge seat and the other of the two portions is engaged with the cartridge holders, the cartridge holders configured and positioned to move the latch from the locking position to the releasing position; and
the cartridge support assembly (28) being moved to its cartridge operating position to cause the cam elements to separate the portion engaged with the cartridge holders thereof from the portion positioned with the cartridge seat from one another, the two portions moving along with the cam elements and the cartridge seat, respectively, which individually positions each of the two portions of the cartridge body in individual operative positions wherein the stock materials on each of the feed rolls can be fed into the master processing assembly for performance of the master processing operation, thereby establishing the operative position of the cartridge.

23. A combination according to claim 21 or 22, wherein the cartridge holders are adjustably mounted with respect to the cam elements such that the cartridge holders can be moved to accommodate different cartridges that support different feed roll widths.

24. A combination according to any of claims 21 to 23, further comprising a fan (112) configured and positioned to blow air into the stock materials (20, 22) of the feed rolls (16, 18) when each of the two portions of the cartridge body (14) are in their individual operative positions, the air from the fan (112) forcing end portions of the stock materials into engagement with the master processing assembly.

25. A combination according to any of claims 21 to 23, wherein the cam elements include cam surfaces that engage respective bearings provided on the frame (24) of the apparatus, the cam surfaces being configured to ride along respective bearings as the cartridge support assembly is moved from the cartridge receiving position to the cartridge operating position to cause the cam elements to separate the two portions from one another.

26. A combination according to any of claims 21 to 25, further comprising a cover pivotally connected to the frame (24) for movement about an axis, the cover (114) including a cam element mounted thereto that rotates along with the cover about the axis, wherein the cam element is structured to selectively engage a switch unit depending on the position of the cover, the switch unit configured to control operation of the master processing assembly.

27. A combination according to any of claims 21 to 26, wherein the two portions are removably coupled together by a fixture, and wherein the cartridge support assembly (28) includes a cartridge seat and a pair of cam elements providing a pair of cartridge holders,
the cartridge (12) with the two portions removably coupled together by the fixture being mounted to the cartridge support assembly in its cartridge receiving position such that one of the two portions is positioned within the cartridge seat and the other of the two portions is engaged with the cartridge holders; and
the cartridge support assembly (28) being moved to its cartridge operating position to cause the cam elements to separate the portion engaged with the cartridge holders thereof from the fixture and to cause the cartridge seat to separate the portion therein from the fixture, the two portions moving along with the cam elements and the cartridge seat, respectively, which individually positions each of the two portions of the cartridge body in individual operative positions wherein the stock materials on each of the feed rolls (116, 118) can be fed into the master processing assembly for performance of the master processing operation, thereby establishing the operative position of the cartridge.

28. A combination according to any of claims 21 to 27, wherein the cartridge support assembly (28) is an original part of the master processing apparatus (10).

29. A combination according to any of claims 21 to 27, wherein the cartridge support assembly (28) is retrofit onto the master processing apparatus (10).

30. A cartridge (12) comprising:
a cartridge body (14);
a pair of feed rolls (16, 18) rotatably mounted on the cartridge body and each carrying a supply of stock material (20, 22) having adhesive provided thereon;
the cartridge body (14) including two portions (130, 132) removably coupled together, one of the feed rolls being mounted to one of the two portions and the other of the feed rolls being mounted to the other of the two portions.

31. A cartridge according to claim 30, further comprising a latch (160) movable between a locking position removably coupling the two portions of the cartridge body together and a releasing position enabling the two portions to be separated.

32. A cartridge according to claim 30 or 31, further comprising a fixture structured to removably couple the two portions of the cartridge body together.
